# EUROPEAN PATENT SPECIFICATION

(11) **EP 3 805 589 B1**
(45) Date of publication and mention of the grant of the patent: **09.08.2023**
(21) Application number: 18920884.6
(22) Date of filing: 30.05.2018
(51) Int. Cl.: F16D 65/14, B60T 13/74, F16D 55/228

(54) **DISC HYDRAULIC ANTI-LOCK BRAKE AND BRAKE SYSTEM**
HYDRAULISCHE BLOCKIERGESCHÜTZTE SCHEIBENBREMSE UND BREMSSYSTEM
FREIN ANTIBLOCAGE HYDRAULIQUE À DISQUE ET SYSTÈME DE FREIN

(43) Date of publication of application: 14.04.2021
(73) Proprietor: Qingdao Xuzhou Construction Machinery Sale and Service Co., Ltd., Qingdao, Shandong 266108 (CN)
(72) Inventor: WU, Maoting, Qingdao, Shandong 266109 (CN)
(74) Representative: Dehns
(86) International application number: PCT/CN2018/088970
(87) International publication number: WO 2019/227325

(56) References cited:
- CN-A- 104 214 253
- CN-U- 204 025 457
- DE-A1- 2 440 600
- FR-A1- 2 897 129
- JP-A- H 092 230
- US-A- 5 618 086
- US-A1- 2010 300 818
- US-A1- 2017 108 066

## Description

### TECHNICAL FIELD

The present disclosure relates to the field of braking, in particular to a disc hydraulic anti-lock brake and a brake system for an equipment including wheels and the like that perform rotating motion.

### BACKGROUND

With the increasing number of various vehicles, machinery and other equipment, people have higher and higher requirements for the safe and energy-saving use of the vehicles, machinery and other equipment, and the braking performance is an important basis for the safe operation of vehicles and machinery. Especially when the vehicle has a fast speed and a heavy dead weight, braking inertia has an increasing influence on safe driving. How to reduce and optimize the influence of braking inertia on the braking of equipment including vehicles and machinery (such as winches) is a problem that all people in the industry need to solve tirelessly.

At present, the existing vehicles on the market include drum brakes and disc brakes. Disc brakes are mostly used in small cars. Most commercial vehicles adopt drum brakes and most of them are pneumatically controlled, and very few low-speed vehicles adopt fluid control, as well as oil-gas hybrid braking. Although all of the above described brakes can achieve braking, slow down and stop the vehicles, they have many shortcomings such as large space occupation, difficult layout, poor braking performance, a worse heat dissipation effect, a complex braking system structure, a poor effect, a high cost, and inconvenient operation, and the like.

At present, the existing ABS (Anti-lock Brake System) on the market can also reduce or optimize the impact of braking inertia on the braking of motor vehicles. However, the existing ABS cannot be widely promoted due to its complex structure, low safety factor and high cost.

Although a Chinese patent application for disclosure with an application No. 2014104098460 and entitled "Hydraulic Anti-lock Brake Wheel Cylinder and Axle Braking System" filed by the inventor on August 19, 2014 solves the above problems, it is difficult to process and realize. Document US 2017/108066 A1 discloses a hydraulic anti-lock brake wheel cylinder and an axle braking system. A hydraulic anti-lock brake wheel cylinder includes a cylinder body with a first cavity having an end cover, a first oil chamber interface, a second oil chamber interface and an oil return interface. A first piston is arranged within the first cavity, a first spring between the first piston and the end cover, a first oil chamber between the first piston and a bottom of the first cavity, the first oil chamber communicating with the first oil chamber interface; the first piston having a second cavity, a second piston arranged within the second cavity; a second spring between the second piston and a bottom of the second cavity, a second oil chamber between the second piston and a top of the second cavity; a core tube within the cylinder body, and one end of the core tube communicating with the second oil chamber, the other end communicating with the second oil chamber interface; the oil return interface communicating with the first oil chamber when the first piston moves outwards to a set position.

### SUMMARY

An object of the present disclosure is to provide a disc hydraulic anti-lock brake and a brake system, which can realize not only service braking, but also parking braking, and can also realize anti-lock.

The above object of the present disclosure can be achieved by adopting the following technical solutions.

The present disclosure provides a disc hydraulic anti-lock brake, comprising:
a support provided with a first hole, passages, a core tube, a brake pad base provided at an opening of the first hole, and a mounting portion being able to mount the support to a vehicle axle, wherein the passages comprise a first passage, a second passage and a third passage, and the second passage is in communication with the core tube;
a first piston provided in the first hole, wherein a first cavity is formed between the first piston and a bottom of the first hole, the first cavity is in communication with a service brake valve (i.e., commonly known as a foot brake valve) through the first passage and a first pipeline, and the first piston is provided with a second hole;
wherein the second hole is provided with an end cover, an outer side of the end cover is fixedly connected with the first piston, an inner side of the end cover is provided with a sealing device, a screwing device being provided at a top of the end cover, a channel is provided on a side wall of a second piston, the second piston is provided to pass through the end cover and extend within the second hole, an end of the core tube distal to the second passage passes through the first piston and is inserted into the second piston, a second cavity is formed between the second piston and the end cover, the second cavity is able to be in communication with a parking brake valve (i.e., commonly known as a hand brake valve) through the channel, the core tube, the second passage and a second pipeline;
an elastic member provided between the second piston and a bottom of the second hole; wherein the elastic member may be a spring or gas, and in the present disclosure, preferably, the elastic member is the gas;
a brake pad provided on the brake pad base;
a brake disc provided with a counting gear ring and a mounting portion, wherein the mounting portion of the brake disc is fixable to an output shaft of the vehicle axle;
a brake release system comprising a pump and an unloading valve provided on the support and/or being able to be provided on a motor vehicle frame, wherein an inlet port of the pump is able to be in communication with a liquid container through a third pipeline, an outlet port of the pump is able to be in communication with the second cavity through the second passage and the core tube; an inlet port of the unloading valve is in communication with the second cavity through the second passage and the core tube, and an outlet port of the unloading valve is able to be in communication with the liquid container through the third pipeline;
an anti-lock system comprising a counting sensor provided on the support and/or being able to be provided on the motor vehicle frame, a motor and a drain valve provided on the support and/or being able to be provided on the motor vehicle frame, and the counting gear ring provided on the brake disc, wherein an outlet port of the drain valve is able to be in communication with the liquid container, an inlet port of the drain valve is in communication with the first cavity through the third passage, and wherein in the case that the number of revolution of the counting gear ring detected by the counting sensor reaches a set count value, the motor starts and drives the drain valve to operate, so that an oil circuit between the first cavity and the third pipeline, the liquid container is able to be opened or closed, so that the pressure of the first piston pressing against the brake disc is increased and decreased alternately to achieve the purpose of anti-lock;
wherein alternatively, the brake release system and the anti-lock system may be integrated to form a relay valve, the relay valve is provided on the support and/or being able to be provided on the motor vehicle frame, the relay valve may be directly connected to the first passage, the second passage and the third passage, and the relay valve may also be connected to the first passage, the second passage and the third passage through a pipeline.

The present disclosure further provides a disc hydraulic anti-lock brake, comprising:
a support provided with a first hole, a second hole, a core tube, passages, a brake pad base provided at an opening of the first hole and an opening of the second hole, and a mounting portion being able to mount the support to a vehicle axle, wherein the passages comprise a first passage, a second passage and a third passage, and the second passage is in communication with the core tube;
a first piston provided in the first hole, wherein a first cavity is formed between a bottom of the first piston and a bottom of the first hole, the first cavity is able to be in communication with a service brake valve (i.e., commonly known as a foot brake valve) through the first passage and a first pipeline;
a second piston provided in the second hole, wherein the second hole is provided with an end cover, a second cavity is formed between the second piston and the end cover, the second cavity is able to be in communication with a parking brake valve (i.e., commonly known as a hand brake valve) through the core tube, the second passage, and a second pipeline;
a spring provided between the second piston and a bottom of the second hole;
a brake disc provided with a counting gear ring and a mounting portion, wherein the mounting portion is fixable to an output shaft of the vehicle axle;
a brake release system comprising a pump and an unloading valve provided on the support and/or being able to be a motor vehicle frame, wherein an inlet port of the pump is able to be in communication with a liquid container through a third pipeline, an outlet port of the pump is in communication with the second cavity through the second passage and the core tube; an inlet port of the unloading valve is able to be in communication with the second cavity through the second passage and the core tube, and an outlet port of the unloading valve is able to be in communication with the liquid container through the third pipeline;
an anti-lock system comprising a counting sensor provided on the support and/or being able to be provided on the motor vehicle frame, a motor and a drain valve provided on the support and/or being able to be provided on the motor vehicle frame, and the counting gear ring provided on the brake disc, wherein an outlet port of the drain valve is able to be in communication with the liquid container, an inlet port of the drain valve is in communication with the first cavity through the third passage, and in the case that the number of revolution of the counting gear ring detected by the counting sensor reaches a set count value, the motor starts and drives the drain valve to operate, so that an oil circuit between the first cavity and the third pipeline, the liquid container is able to be opened or closed, so that the pressure of the first piston pressing against the brake disc is increased and decreased alternately to achieve the purpose of anti-lock;
wherein alternatively, the brake release system and the anti-lock system may be integrated to form a relay valve, the relay valve is provided on the support and/or being able to be provided on the motor vehicle frame, the relay valve may be directly connected to the first passage, the second passage and the third passage, and the relay valve may also be connected to the first passage, the second passage and the third passage through a pipeline.

The disclosure further provides a disc hydraulic anti-lock brake system, which is applied to braking of motor vehicles, the disc hydraulic anti-lock brake system comprises a liquid container, a liquid pump, a liquid filling valve, an accumulator, a service brake valve, a parking brake valve, an axle, a first pipeline, a second pipeline, a third pipeline and a disc hydraulic anti-lock brake, wherein the disc hydraulic anti-lock brake is the disc hydraulic anti-lock brake described above;
when the liquid pump is in operation, liquid in the liquid container is driven into the accumulator by the liquid pump and the liquid filling valve, and is stored at a set pressure;
when the parking brake valve is opened by a driver, high-pressure oil in the accumulator enters into the second cavity through the parking brake valve, the second pipeline, the second passage, the core tube and the channel on the second piston, and when a pressure in the second cavity increases to a set pressure, the elastic member is compressed, the second piston retracts, the brake lining on the brake pad releases the brake disc, and the parking brake is released;
when the parking brake valve is closed as the driver stops the vehicle or for emergency stop in driving, a pressure liquid in the second cavity is driven back to the liquid container through the channel on the second piston, the core tube, the second passage, the second pipeline and the parking brake valve by the elastic member, and under the effect of the elastic member, the second piston drives the brake pad to press against the brake disc, and the motor vehicle is put into a parking brake state;
when the service brake valve is trod by the driver, a high-pressure liquid in the accumulator enters into the first cavity through the service brake valve, the first pipeline and the first passage, and the first piston drives the brake pad against the brake disc, the brake disc transmits a pressure to the axle, and the motor vehicle decelerates or stops; when the service brake valve is released by the driver, the liquid in the first cavity is driven back to the liquid container through the first passage, the first pipeline, and the service brake valve, the pressure in the first cavity disappears, the pressure of the brake pad acting on the brake disc disappears, and the service brake is released;
when the service brake valve is trod by the driver and the number of revolution of the counting gear ring detected by the counting sensor reaches a set value, the motor drives a drain valve spool to rotate, and the drain valve is repeatedly connected to and disconnected from the third pipeline and the liquid container; when the number of revolution of the counting gear ring detected by the counting sensor is lower than a set value, the motor stops rotating, the drain valve is disconnected from the third pipeline and the liquid container, and the service brake state is restored;
when a brake failure occurs to impede driving of the vehicle or when the parking brake needs to be released for a rescue, a pump driving device is driven to pump the liquid in the liquid container and the third pipeline into the second cavity through the pump, the second passage, the core tube and the channel of the second piston, the elastic member is compressed, the second piston retracts, the brake lining and the brake disc on the brake pad are released, and the parking brake is released;
when the parking brake function needs to be restored after the brake is repaired, an unloading valve driving device is driven, the unloading valve is in communication with the third pipeline and the liquid container, the pressure liquid in the second cavity flows out, and a channel of the unloading valve with the third pipeline and the liquid container is closed, elastic force of the elastic member is released, and the parking brake function is restored.

The disc hydraulic anti-lock brake and the brake system provided by the present disclosure can realize not only service braking, but also parking braking, and can also realize anti-lock braking, and are easy to realize.

### BRIEF DESCRIPTION OF DRAWINGS

FIG. 1 is a structural schematic view of the disc hydraulic anti-lock brake according to the present disclosure.
FIG. 2 is a structural schematic view of the disc hydraulic anti-lock brake provided on an axle according to the present disclosure.
FIG. 3 is a stereoscopic structural schematic view of a support of the disc hydraulic anti-lock brake according to the present disclosure.
FIG. 4 is a stereoscopic exploded structural schematic view of the support of the disc hydraulic anti-lock brake according to the present disclosure.
FIG. 5 is a main structural schematic view of a support of the disc hydraulic anti-lock brake according to the present disclosure.
FIG. 6 is a structural schematic sectional view of the support of the disc hydraulic anti-lock brake according to the present disclosure.
FIG. 7 is a stereoscopic structural schematic of a first piston and a second piston according to the present disclosure.
FIG. 8 is a structural schematic sectional view of a first embodiment of the first piston and the second piston of the present disclosure.
FIG. 9 is a structural schematic sectional view of a second embodiment of the first piston and the second piston of the present disclosure.
FIG. 10 is a structural schematic view of another embodiment of the support of the disc hydraulic anti-lock brake of the present disclosure.
FIG. 11 is a structural schematic sectional view taken along the cutline H-H in FIG. 10.
FIG. 12 is a structural schematic sectional view taken along the cutline I-I in FIG. 10.
FIG. 13 is a stereoscopic structural schematic of a relay valve of the disc hydraulic anti-lock brake according to the present disclosure.
FIG. 14 is a main structural schematic view of the relay valve of the disc hydraulic anti-lock brake according to the present disclosure.
FIG. 15 is a structural schematic sectional view taken along the cutline A-A in FIG. 14.
FIG. 16 is a structural schematic sectional view taken along the cutline B-B in FIG. 14.
FIG. 17 is a structural schematic sectional view taken along the cutline C-C in FIG. 14.
FIG. 18 is a structural schematic sectional view taken along the cutline D-D in FIG. 14.
FIG. 19 is a structural schematic sectional view taken along the cutline E-E in FIG. 14.
FIG. 20 is a structural schematic view of an unloading valve of the disc hydraulic anti-lock brake according to the present disclosure.
FIG. 21 is a structural schematic view of the disc hydraulic anti-lock brake system according to the present disclosure.
FIG. 22 is a structural schematic sectional view of a drain valve spool of the drain valve of the present disclosure.

### DETAILED DESCRIPTION

The present disclosure will be further described in detail below in conjunction with the accompanying drawings.

### First Embodiment

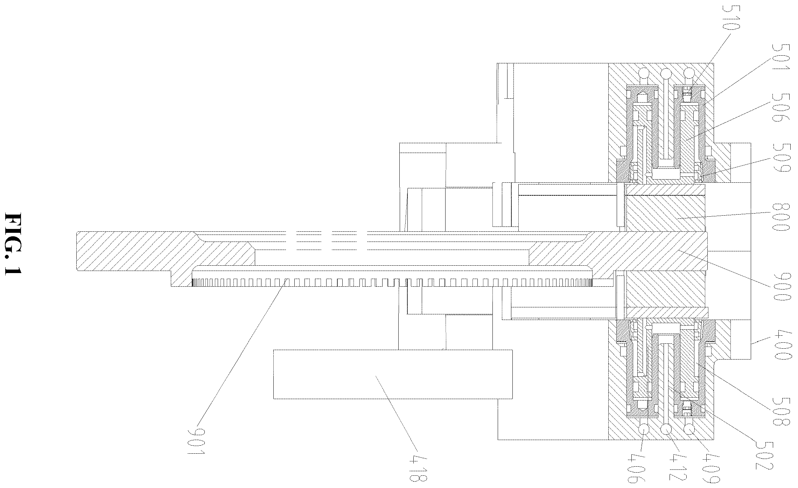

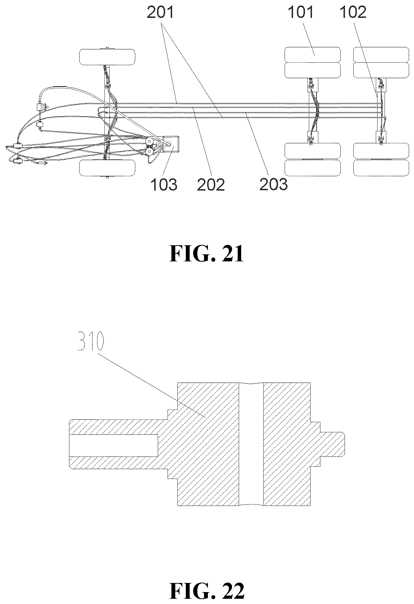

As shown in FIGs. 1 to 9 and 13 to 21, the present disclosure provides a disc hydraulic anti-lock brake, comprising: a support 400, a first piston 501, a second piston 506, an elastic member 505, a brake pad 800, a brake disc 900, a brake release system and an anti-lock brake system. In which, the first piston 501 is received within a first hole 415 of the support 400, and the first piston 501 can move axially within the first hole 415. The second piston 506 is received within the second hole 504 of the first piston 501, and the second piston 506 can move axially in the second hole 504. The end cover 509 is provided at an opening of the second hole 504 and fixedly connected with the second hole 504 to limit the extreme movement stroke of the first piston 501 and the second piston 506. The elastic member 505 is provided between the second piston 506 and a bottom of the second hole 504 to apply a pressure to the first piston 501 and the second piston 506. The brake pad 800 is fixedly provided on the brake pad base of the support 400 and can be moved by an abutment force of the first piston 501 or the second piston 506. The brake pad 800 can also be provided with brake lining. The brake disc 900 is fixedly provided on the axle 102 through the mounting portion to receive the friction force exerted by the brake pad 800 and drive the axle 102 to decelerate or stop rotating, thereby realizing the deceleration or parking of the motor vehicle. The brake release system is configured to inject hydraulic oil into the second cavity 508 or discharge hydraulic oil out of the second cavity 508, to realize that the second piston 506 drives the brake pad 800 to contact with or be separated from the brake disc 900, thereby releasing or restoring the brake. The anti-lock system is configured to change the pressure of the first piston 501 driving the brake pad 800 to press against the brake disc 900 to achieve the purpose of anti-lock.

Specifically, as shown in FIGs. 1 to 9 and 13 to 20, the support 400 is provided with a first hole 415, passages, a core tube 502, a brake pad base provided at the opening of the first hole 415, and a mounting portion 418 for mounting the support 400 to the axle 102. The passages include a first passage 406 (i.e., a service brake oil passage), a second passage 412 (i.e., a parking brake oil passage) and a third passage 409 (i.e., an oil return passage), the second passage 412 is in communication with the core tube 502. The first piston 501 is provided within the first hole 415, a first cavity is formed between the first piston 501 and a bottom of the first hole 415, the first cavity is in communication with a service brake valve through the first passage 406 and a first pipeline 201 (i.e., a service brake pipeline), and the first piston 501 is provided with a second hole 504. The second hole 504 is provided with an end cover 509 (i.e., the second hole is fixedly connected to the end cover), an outer side of the end cover 509 is fixedly connected with the first piston 501, and an inner side of the end cover 509 is provided with a sealing device. A screwing device is provided on a top of the end cover 509. The side wall of the second piston is provided with a channel 511. The second piston 506 passes through the inner side of the end cover 509 and extends in the second hole 504 in a sealed manner. An end of the core tube 502 distal to the second passage 412 passes through the first piston 501 and is inserted into the second piston 506. The second cavity 508 is formed between the second piston 506 and the end cover 509, and the second cavity 508 is in communication with the parking brake valve through the channel 511, the core tube 502, the second passage 412 and the second pipeline 202 (i.e., a parking brake pipeline). The elastic member 505 is provided between the second piston 506 and the bottom of the second hole 504. The brake pad 800 is provided on the brake pad base. The brake disc 900 is provided with a counting gear ring 901 and a mounting portion, and the mounting portion of the brake disc 900 is fixed to an output shaft of the axle 102. The brake release system includes a pump 315 and an unloading valve 322 provided on the support 400 and/or the motor vehicle frame. The inlet port of the pump 315 is in communication with the liquid container 103 through the third pipeline 203 (i.e., an oil return pipeline), and the outlet port of the pump 315 is in communication with the second cavity 508 through the second passage 412 and the core tube 502. The inlet port of the unloading valve 322 is in communication with the second cavity 508 through the second passage 412 and the core tube 502, and the outlet port of the unloading valve 322 is in communication with the liquid container 103 through the third pipeline 203. The anti-lock system includes a counting sensor provided on the support 400 and/or the motor vehicle frame (a counting sensor base 419 can be provided on the support 400 and/or the vehicle frame, for fixing the counting sensor), a motor 309 and a drain valve 310 provided on the support 400 and/or the motor vehicle frame, and the counting gear ring provided on the brake disc 900, wherein the outlet port of the drain valve 310 is in communication with the liquid container 103, the inlet port of the drain valve 310 is in communication with the first cavity through the third passage 409, and in the case that the number of revolution of the counting gear ring detected by the counting sensor reaches a set count value, the motor 309 starts and drives the drain valve 310 to operate, so that an oil circuit between the first cavity and the third pipeline 203, the liquid container is opened or closed (i.e., an oil circuit between the first cavity and the liquid container 103 is alternately opened or closed), so that the pressure of the first piston pressing the brake disc is repeatedly increased and decreased to achieve anti-lock.

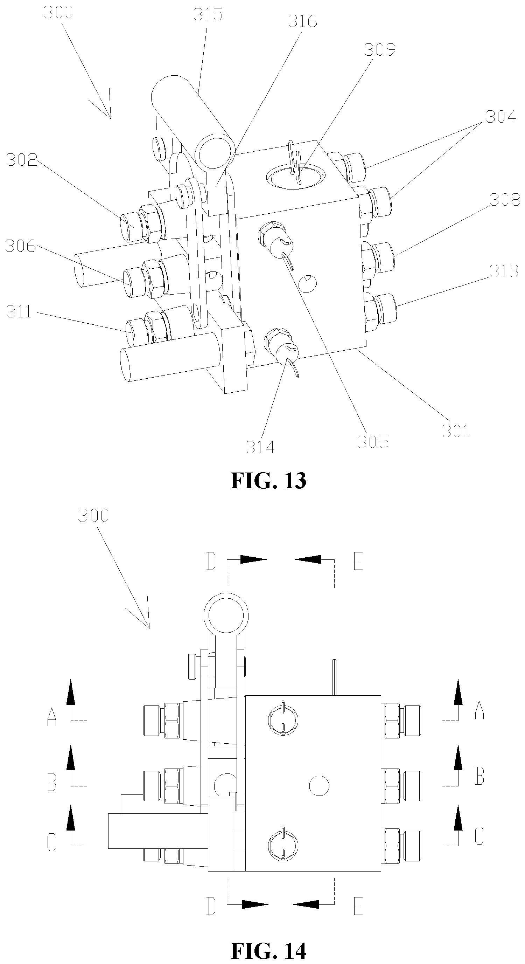

As shown in FIGs. 13, 18, 19 and 20, the brake release system and the anti-lock system may also be integrated to form a relay valve 300, the relay valve 300 is provided on the support 400 and/or the motor vehicle frame, the relay valve 300 may be directly connected to the first passage 406, the second passage 412 and the third passage 409, and the relay valve 300 may also be connected to the first passage 406, the second passage 412 and the third passage 409 through a pipeline. A brake system including a plurality of the disc hydraulic anti-lock brakes may share a single relay valve 300, or each of the plurality of the disc hydraulic anti-lock brakes in the brake system may include a single relay valve 300 individually. Specifically, the relay valve 300 is provided on the support 400 or the vehicle frame, and includes a housing 301 with one side of which is provided with an upper port 302, a middle port 306, and a lower port 311, respectively, from top to bottom, and the other side of which is provided with two upper branch ports 304, two middle branch ports 308, and two lower branch ports 313, respectively, from top to bottom, wherein an upper oil circuit 303 is formed between the upper port 302 and the two upper branch ports 304, the upper port 302 of the upper oil circuit 303 is connected with the first pipeline 201, the two upper branch ports 304 of the upper oil circuit 303 are connected to two ends of the first passage 406, respectively. A middle oil circuit 307 is formed between the middle port 306 and the two middle branch ports 308, the middle port 306 of the middle oil circuit 307 is connected with the third pipeline 203, the two middle branch ports 308 of the middle oil circuit 307 are connected to two ends of the third passage 409, respectively. A lower oil circuit 312 is formed between the lower port 311 and the two lower branch ports 313, the lower port 311 of the lower oil circuit 312 is connected with the second pipeline 202, and the two lower branch ports 313 of the lower oil circuit 312 are connected to two ends of the second passage 412, respectively.

Furthermore, a pressure sensor 314 is provided on the housing 301 of the relay valve 300, and the pressure sensor 314 is provided on the lower oil circuit 312 to monitor the pressure in the lower oil circuit 312 (that is, the pressure during parking brake and release of parking brake), and which is fed back to a vehicle control mechanism and a driver of the driving cab. The upper oil circuit 303 in the housing 301 of the relay valve 300 is provided with a pressure switch 305 capable of detecting a pressure. The pressure switch 305 is electrically connected to the motor 309, and the pressure switch 305 will feedback the monitored pressure in the upper oil circuit 303 to the vehicle control mechanism in real time. When the pressure in the first passage 406 of the support 400 or the pressure in the upper oil circuit 303 exceeds the set pressure value, the anti-lock state is entered, the pressure switch 305 turns on the motor 309, and the motor 309 drives the drain valve 310 to operate.

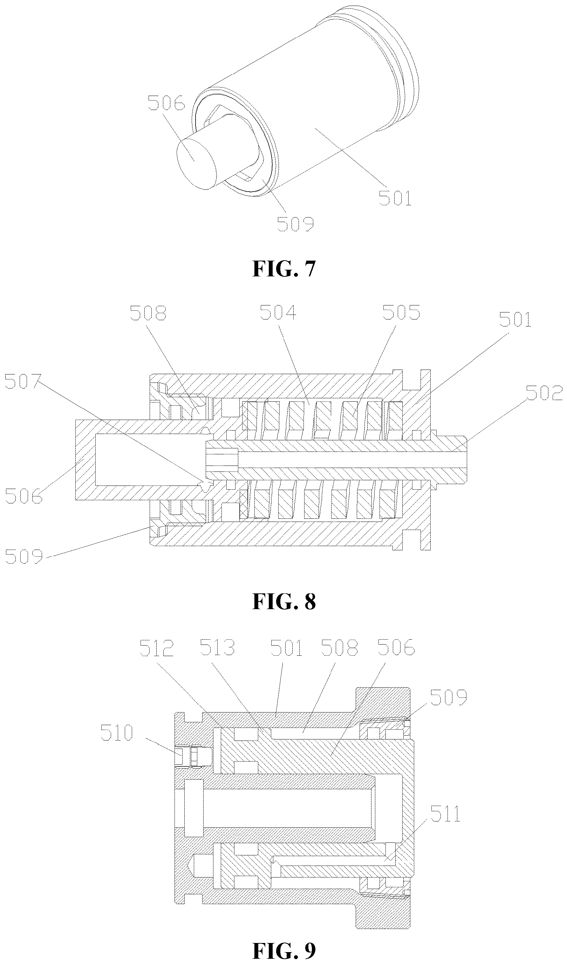

Furthermore, as shown in FIG. 9 which is a structural schematic sectional view of a second embodiment of the first piston and the second piston. Preferably, the elastic member 505 is an air cavity enclosed by the second piston 506 and the second hole 504, the air cavity is filled with compressed gas to a set value to form a gas spring to act on the first piston 501 or the second piston 506 through the elastic force of the gas spring. Or, as shown in FIG. 8 which is a structural schematic sectional view of a first embodiment of the first piston and the second piston. The elastic member 505 is a spring, which acts on the first piston 501 or the second piston 506 through the elastic force of the spring, wherein the spring may be a metal spring, a rubber spring, or other forms of springs.

In an embodiment, as shown in FIG. 8, the first piston 501 is in a shape of a single-walled cup-shaped cylinder, a cup bottom of the first piston 501 is provided with a circular hole and a sealing means through which the core tube 502 passes. A second hole 504 is recessed at one end of the first piston 501 that is close to the brake pad 800 (i.e., the top of the first piston 501). The second hole 504 is generally cylindrical to accommodate the second piston 506. A fixing nut 503 sleeves on one end of the first piston 501 close to the brake pad 800 to fix it on the support 400. The first piston 501 is in sealed contact with the inner wall surface of the first hole 415 through a seal, so that a first cavity is formed between the first piston 501 and a bottom surface of the first hole 415. An elastic member 505 is provided between the bottom surface of the second hole 504 of the first piston 501 and the second piston 506 to provide an acting force for the first piston 501 and the second piston 506. An end cover 509 is fixedly provided between the opening of the first piston 501 and the outer wall of the second piston 506. The second piston 506 can pass through the end cover 509 in a sealed and moving manner. A second cavity 508 is formed between the end cover 509, the outer wall surface of the second piston 506 and the inner wall surface of the second hole 504. The second piston 506 is provided therein with an inner cavity, and an end of the core tube 502 extends into the inner cavity of the second piston 506 and communicates with the second cavity 508 through an oil hole 507 or a channel 511 provided in the second piston 506.

In another embodiment, as shown in FIG. 9, the first piston 501 is in a shape of a double-walled cylinder, and includes an inner wall and an outer wall. The bottom wall of the inner wall of the first piston 501 is provided with a through hole and a sealing means through which the core tube 502 passes. The bottom wall between the inner wall and the outer wall of the first piston 501 is provided with an inflation device, the inflation device communicates with the air cavity so as to facilitate filling the air cavity with compressible gas, wherein the inflation device may be a valve core 510. A pipe string is provided within the second hole 504 in a protruding manner on the bottom wall of the first piston 501, the pipe string forms the inner wall of the first piston 501, and the through hole in the pipe string is used for the core pipe 502 to pass through. A second hole 504 is formed between the inner and outer walls of the first piston 501, the second piston 506 is inserted into the second hole 504, and an end cover 509 is fixedly provided between the opening of the first piston 501 and the outer wall of the second piston 506. The second piston 506 can pass through the end cover 509 in a sealed and moving manner. A second cavity 508 is formed between the end cover 509, the outer wall surface of the second piston 506 and the inner wall surface of the second hole 504. The core tube 502 passing through the first piston 501 extends into the second piston 506 and communicates with the second cavity 508 of the second piston 506 through the oil hole 507 or the channel 511 on the second piston 506. In addition, the bottom wall of the first piston 501 is provided with a plurality of recesses at equal intervals along the circumferential direction, and the recesses communicate with the air cavity to ensure that the gas can have a safe containment space when the second piston 506 moves to the bottom wall of the first piston 501.

Furthermore, as shown in FIG. 9, the second piston 506 is in the shape of a thick-edge round cup, and a cup body of the second piston 506 is provided with a channel 511. The channel 511 is substantially Z-shaped, so that the second cavity 508 can communicate with the core tube 502 through the channel 511. The side walls of the second piston 506 are respectively provided with a gas sealing portion 512 and a liquid sealing portion 513 that are in sealing contact with the first piston 501. Two ends of the gas sealing portion 512 are in sealing contact with the inner wall and the outer wall of the first piston 501, respectively, to ensure the air tightness of the air cavity and avoid gas leakage from the air cavity. The liquid sealing portion 513 and the gas sealing portion 512 arranged at intervals, and both ends of the liquid sealing portion 513 are in sealing contact with the inner wall and the outer wall of the first piston 501, respectively, to ensure the sealing performance of the second cavity 508 and avoid liquid leakage.

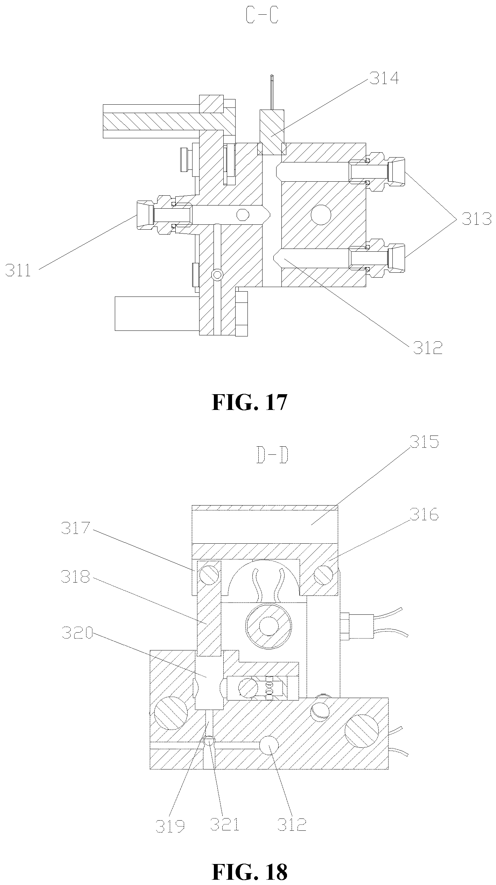

Furthermore, as shown in FIG. 18, the pump 315 includes a pump body, a pump driving device, and a third piston 318. The upper portion of the pump body is provided with an inlet port and a third piston hole 320, the inlet port is communicated with the third piston hole 320, the inlet port of the pump body is in communication with the liquid container 103 through the third pipeline 203, the lower portion of the pump body is provided with an outlet port, the outlet port of the pump body is in communication with the second cavity 508 through the second channel 412. A fulcrum on a side (i.e., a fixed end 316) of the pump driving device is provided on the pump body, the third piston 318 on the other side of the pump driving device (that is, a movable end 317) is mounted in the third piston hole 320, and the third piston 318 is connected to the pump driving device. Specifically, the pump body of the pump 315 of the brake release system is fixedly provided on the housing 301 of the relay valve 300. An end of the pump 315 is a fixed end 316, which serves as a fulcrum in operation, and the other end of the pump 315 is a movable end 317 to drive the third piston 318 connected to the movable end 317 to reciprocate up and down in the third piston hole 320. The cylindrical shape between the fixed end 316 and the movable end 317 of the pump 315 is a pump driving device for manually driving the pump to operate. The inlet port of the pump body is communicated with the middle oil circuit 307, and the outlet port thereof is communicated with the lower oil circuit 312 so as to communicate with the liquid container 103 through the middle oil circuit 307, the middle port 306 and the third pipeline 203 of the relay valve 300, and to communicate with the second cavity 508 via the lower oil circuit 312 and the lower branch port 313 of the relay valve 300, and the second passage 412 of the support 400, and an unlocking oil circuit 319 is formed between the inlet port and the outlet port of the pump body. A one-way valve 321 is provided in the unlocking oil circuit 319 so that liquid can only be supplied from the liquid container 103 to the second cavity 508 through the unlocking oil circuit 319. The elastic member 505 is compressed, so that the second piston 506 drives the brake pad 800 away from the brake disc 900 to release the parking brake.

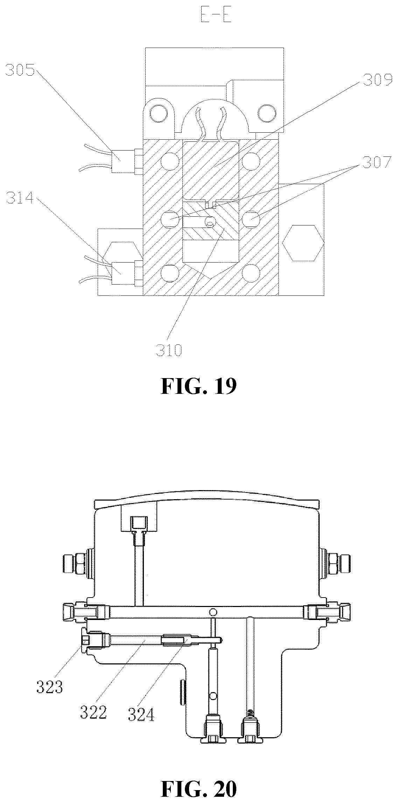

Furthermore, as shown in FIG. 20, the unloading valve 322 includes an unloading valve body, an unloading valve spool 324, and an unloading valve driving device 323. The unloading valve body is provided with an inlet port, an outlet port, and an unloading spool hole. The inlet port of the unloading valve body communicates with the second cavity 508 through the second passage 412 and the core tube 502, and the outlet port of the unloading valve body communicates with the liquid container 103 through the third pipeline 203. The unloading spool hole is provided between the inlet port and the outlet port of the unloading valve body. The unloading valve spool 324 is provided within the unloading spool hole. The unloading valve driving device 323 is connected to the unloading valve spool 324. Specifically, the unloading valve 322 of the brake release system is provided in the housing 301 of the relay valve 300. The valve body of the unloading valve is provided with an unloading valve driving device 323 at one end thereof outside the housing 301. The unloading valve driving device 323 is a hexagon socket bolt. An end of the unloading valve body located in the housing 301 is the unloading spool hole to accommodate the unloading valve spool 324. The unloading valve body extends upward and downward from the unloading spool hole to form an inlet port and an outlet port. Both of the inlet port and the outlet port are communicated with the lower oil circuit 312 of the relay valve 300, to communicate with the second cavity 508 via the lower branch port 313, the second passage 412 and the core tube 502, and to communicate with the liquid container 103 via the lower port 311 and the third pipeline 203, so that the liquid within the second cavity 508 is driven back to the liquid container 103. The elastic member 505 is released so that the second piston 506 drives the brake pad 800 to contact with the brake disc 900 under the effect of the elastic member 505 to restore the parking brake.

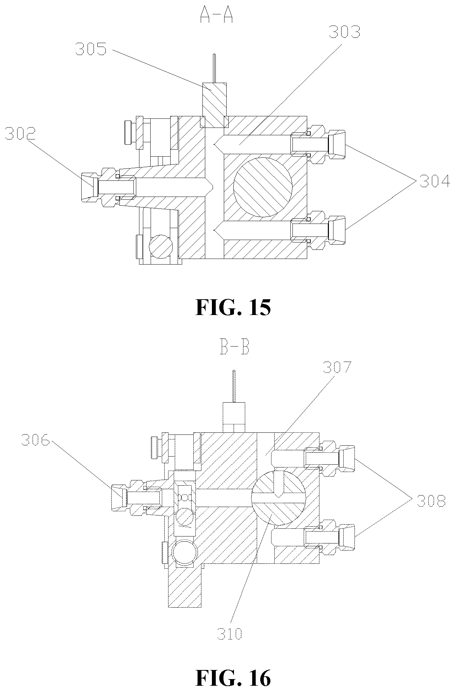

Furthermore, as shown in FIGs. 16, 19 and 22, the drain valve 310 is provided with a drain valve body and a drain valve spool. The drain valve body is provided with a drain spool hole, an inlet port and an outlet port. The inlet port of the drain valve body is communicated with the first cavity through the third passage 409. The outlet port of the drain valve body is communicated with the liquid container 103 through the third pipeline 203. The drain valve spool is mounted at the lower portion of the drain spool hole. The drain valve spool is provided with an inlet port, the inlet port of the drain valve spool can be communicated with the inlet port of the valve body, and the drain valve spool is further provided with more than one outlet port. The outlet port of the drain valve spool and the outlet port of the drain valve body are assembled in a staggered manner. The top of the drain valve spool is provided with a shaft hole connected to the motor 309. The motor 309 is mounted at the upper portion of the drain spool hole. The motor shaft of the motor 309 is inserted into the shaft hole of the drain valve spool. The motor 309 drives the drain valve spool to rotate when the motor 309 is energized. The outlet port of the drain valve body and the outlet port of the drain valve spool are switched on and off alternately (that is, continuously on and off), so that the pressure of the first piston pressing against the brake disc is repeatedly increased and decreased to achieve the purpose of anti-lock. The liquid discharged from the outlet port of the drain valve 310 communicates with the liquid container 103 through the third pipeline 203. Specifically, the motor 309 of the anti-lock system is provided within the relay valve 300, and the drain valve 310 of the anti-lock system is provided within the middle oil circuit 307 of the relay valve 300, so as to be able to communicate with the third passage 409 and the first cavity through the middle branch port 308, and to communicate with the third pipeline 203 through the middle port 306. The drain valve spool is driven by the motor 309 to operate to realize opening and closing of the oil circuit. One inlet port of the drain valve 310 can be provided at the lower end of the drain valve body, and more than one outlet port can be provided on a peripheral wall of the drain valve body, and preferably, there are three outlet ports. Alternatively, one inlet port and more than one outlet port of the drain valve are provided on the peripheral wall of the drain valve body at intervals, as long as alternate communication of the oil circuit can be realized.

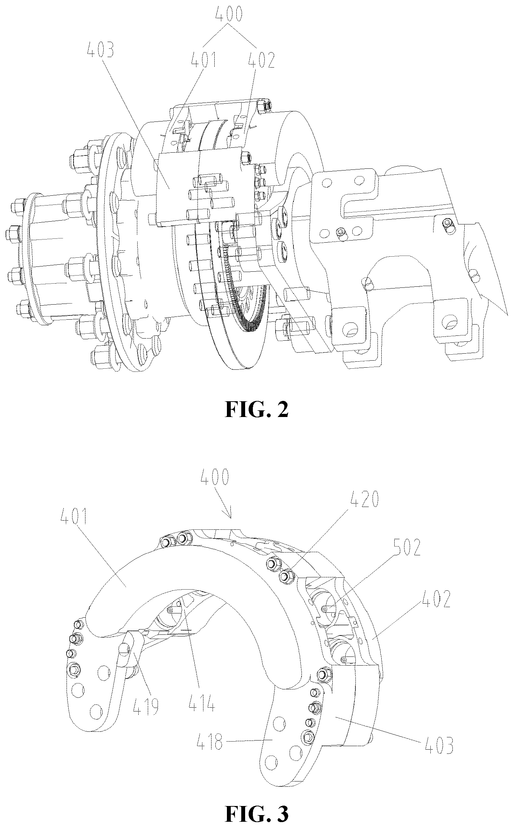

Furthermore, as shown in FIGs. 3 to 6, the support 400 is separately provided as a left support 401 and a right support 402, and a receiving cavity 414 for receiving the brake disc 900 is formed between the left support 401 and the right support 402. The left support 401 and the right support 402 are fixedly connected. The first passage 406, the second passage 412, the third passage 409 of the left support 401 are correspondingly communicated with the first passage 406, the second passage 412, and third passage 409 of the right support 402. The left support 401 is provided with a mounting portion of the support 400, and the mounting portion of the support 400 is fixed to the motor vehicle axle 102. The first hole 415 on the left support 401 and the first hole 415 on the right support 402 are provided to be opposite to each other, wherein the left support 401 and the right support 402 are arranged opposite to each other, and both are substantially in the shape of a semicircular arc. The first holes 415 recessed on the inner side face of the left support 401 are arranged at equal intervals, and are opposite to the first holes 415 recessed on the inner side face of the right support 402 one by one. The first passage 406, the second passage 412, and the third passage 409 provided on the outer side face of the left support 401 are all arc-shaped. The first passage 406 and the third passage 409 are respectively located on both sides of the second passage 412. The two ends of the left support 401 and the two ends of the right support 402 are respectively connected by connecting posts 403 within which three concealed tubes 404 are provided. The first passage 406, the second passage 412 and the third passage 409 of the left support 401 are respectively communicated with the first passage 406, the second passage 412 and the third passage 409 of the right support 402 through a concealed tube 404. In order to ensure the strength of the support 400, the left support 401 and the right support 402 can be connected also by a plurality of intermediate strengthening columns into which the connecting bolt 420 can be inserted, to realize a fastening connection between the left support 401 and the right support 402.

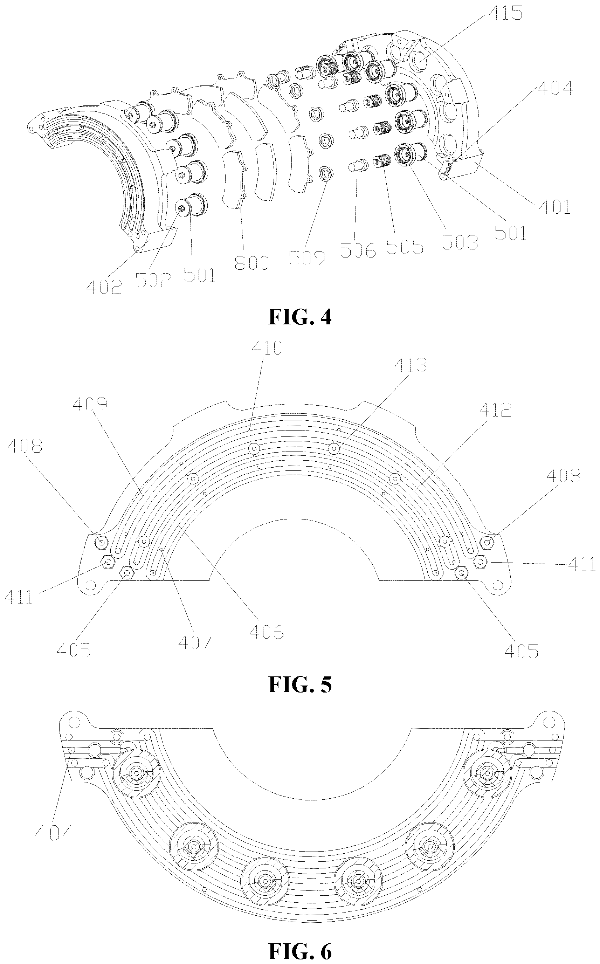

Furthermore, as shown in FIGs. 3 and 5, both ends of the first passage 406 are respectively provided with service brake joints 405, both ends of the second passage 412 are respectively provided with parking brake joints 411, and both ends of the third passage 409 are respectively provided with oil return joints 408, to facilitate installation and connection of the pipelines. A plurality of service brake oil holes 407 are provided in the first passage 406 to communicate with the first cavity. A plurality of parking brake oil holes 413 are provided in the second passage 412 to communicate with the core tube 502. A plurality of oil return holes 410 are provided in the third passage 409 to communicate with the first cavity.

Furthermore, there are one or more first holes 415. Each of the first hole 415 is provided therein with a first piston 501, a second piston 506 and a core tube 502. Preferably, the left support 401 and the right support 402 are respectively provided with six, four or two first holes 415 to make the force acting on the brake pad 800 is uniform.

### Second Embodiment

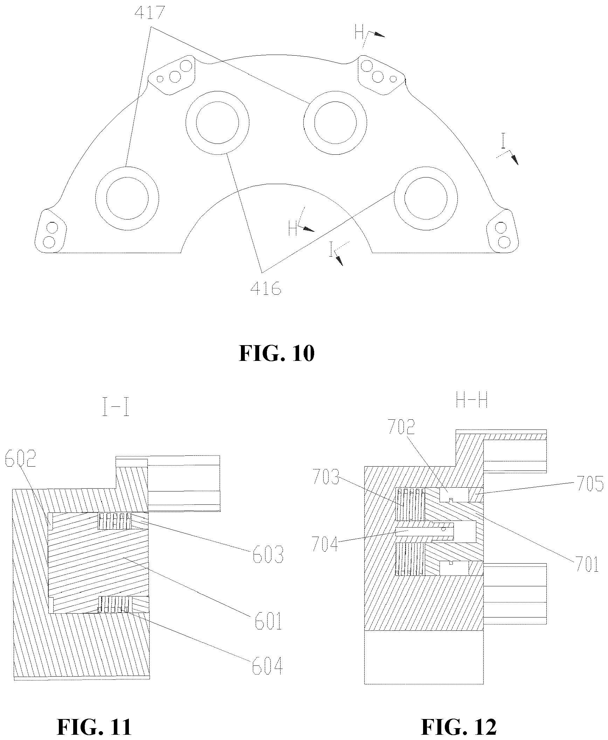

As shown in FIGs. 10 to 12, the present disclosure further provides a disc hydraulic anti-lock brake, which is different from the First Embodiment in that the first hole 416 provided on the support 400 is used to accommodate the first piston 601, the second hole 417 provided on the support 400 is used to accommodate the second piston 701, the first hole 416 and the second hole 417 are alternately provided, and the structures of the first piston 601, the second piston 701, etc. have been adaptively changed according to the changes in these structures.

Specifically, the disc hydraulic anti-lock brake comprises: a support 400, a first piston 601, a second piston 701, a spring 703, a brake disc 900, a brake release system and an anti-lock system. The support 400 is provided with a first hole 416, a second hole 417, a core tube 704, passages and brake pad bases provided at an opening of the first hole 416 and at an opening of the second hole 417 and a mounting portion for mounting the support to the axle. The passages include a first passage 406, a second passage 412 and a third passage 409, the second passage 412 is in communication with the core tube 704. The first piston 601 is provided in the first hole 416, a first cavity 602 is formed between a bottom of the first piston 601 and a bottom of the first hole 416, the first cavity 602 is in communication with the service brake valve through the first passage 406 and the first pipeline 201. The second piston 701 is provided in the second hole 417, the second hole 417 being provided with an end cover 705, a second cavity 702 is formed between the second piston 701 and the end cover 705, the second cavity 702 is in communication with the parking brake valve through the core tube 704, the second passage 412, and the second pipeline 202. The spring 703 is provided between the second piston 701 and the bottom of the second cavity 417. The brake disc 900 is provided with a counting gear ring and a mounting portion, the mounting portion is fixed to an output shaft of the axle 102. The brake release system includes a pump 315 and an unloading valve 322 provided on the support 400 and/or the motor vehicle frame, an inlet port of the pump 315 is in communication with the liquid container 103 through the third pipeline 203, an outlet port of the pump 315 is in communication with the second cavity 702 through the second passage 412 and the core tube 704. An inlet port of the unloading valve 322 is in communication with the second cavity 702 through the second passage 412 and the core tube 704, and an outlet port of the unloading valve 322 is in communication with the liquid container 103 through the third pipeline 203. The anti-lock system includes a counting sensor provided on the support 400 and/or the motor vehicle frame, a motor 309 and a drain valve 310 provided on the support 400 and/or the motor vehicle frame and the counting gear ring provided on the brake disc 900. The outlet port of the drain valve 310 is in communication with the liquid container 103, the inlet port of the drain valve 310 is in communication with the first cavity 602 through the third passage 409. In the case that the number of revolution of the counting gear ring detected by the counting sensor reaches a set count value, the motor 309 starts and drives the drain valve 310 to operate, so that an oil circuit between the first cavity 602 and the third pipeline 203, the liquid container 103 is opened or closed (i.e., an oil circuit between the first cavity 602 and the liquid container 103 is opened or closed alternately), so that the pressure of the first piston pressing against the brake disc 900 is repeatedly increased and decreased to achieve the purpose of anti-lock. The brake release system and the anti-lock system may also be integrated to form a relay valve 300, the relay valve 300 is provided on the support 400 and/or the motor vehicle frame, the relay valve 300 can also be directly connected to the first passage 406, the second passage 412 and the third passage 409, and the relay valve 300 can also be connected to the first passage 406, the second passage 412 and the third passage 409 through a pipeline. A brake system including a plurality of the disc hydraulic anti-lock brakes may share a single relay valve 300, and each of the plurality of the disc hydraulic anti-lock brakes in the brake system may include a single relay valve 300 individually.

As shown in FIG. 11, the first piston 601 is accommodated in the first hole 416 of the support 400 and can move axially therein. The first piston 601 is substantially cylindrical. The diameter of an end of the first piston 601 close to the brake pad 800 is smaller than the inner diameter of the first hole 416, and an end cover 603 is provided between it and the inner wall of the first hole 416. The diameter of one end of the first piston 601 distal to the brake pad 800 is substantially equal to the inner diameter of the first hole 416 to make sealing contact with the first hole 416, and a first cavity 602 capable of containing liquid is formed between the bottom end of the first piston 601 and the bottom wall of the first hole 416. A first spring 604 is accommodated between a large-diameter end of the first piston 601 and the end cover to apply an acting force to the first piston 601. As shown in FIG. 12, the second piston 701 is accommodated in the second hole 417 of the support 400 and can move axially therein. The second piston 701 is substantially in the shape of a thick-edge cup. A spring 703 is provided between a cup opening of the second piston 701 and the bottom wall of the second hole 417. An end cover 705 is provided between a cup bottom of the second piston 701 and the side wall of the second hole 417. A second cavity 702 capable of containing liquid is formed between the cup opening of the second piston 701 and the end cover 705. The cup body of the second piston 701 is provided with a channel in communication with the second cavity 702, so as to realize the communication between the second cavity 702 and the second passage 412 through the core tube 704 passing through the second piston 701.

Preferably, the number of the first hole 416 and the second hole 417 that are arranged in a staggered manner on the support 400 may be three, two or one. When there are two supports 400, the positions and the numbers of the first holes 416 and the second holes 417 on the left support 401 are the same and corresponding to those on the right support 402, and they are evenly distributed along the arc extending direction of the support 400, so that the force acting on the brake pad 800 is uniform.

### Third Embodiment

As shown in FIGs. 1, 2 and 21, the present disclosure further provides a disc hydraulic anti-lock brake system, which is applied to braking of motor vehicles, which of course are not limited to automobiles, but can also be applied to braking of non-automobiles such as high-speed rail brake systems. The disc hydraulic anti-lock brake system includes a liquid container 103, a liquid pump, a liquid filling valve, an accumulator, a service brake valve, a parking brake valve, an axle 102, a first pipeline 201, a second pipeline 202, a third pipeline 203 and a disc hydraulic anti-lock brake. The disc hydraulic anti-lock brake is the disc hydraulic anti-lock brake described in the First Embodiment, and their structures and operation principles are the same, and will not be repeated here.

When the liquid pump is in operation, the liquid in the liquid container 103 is driven into the accumulator by the liquid pump and the liquid filling valve, and is stored at a set pressure.

When the parking brake valve (i.e., a hand brake valve) is opened by the driver, the high pressure oil in the accumulator enters into the second cavity 508 through the parking brake valve, the second pipeline 202, the second passage 412, the core tube 502, and the channel 511 on the second piston 506. When a pressure in the second cavity 508 increases to a set pressure, the elastic member 505 is compressed, and the second piston 506 retracts (that is, the second piston 506 compresses the elastic member 505 toward the bottom of the second hole 504), the brake lining on the brake pad 800 releases the brake disc 900, and the parking brake is released, allowing the vehicle to start driving or moving. When the vehicle is in the parking brake state, the pressure of the second piston 506 in the support 400 on the elastic member 505 drives the brake pad 800 to closely contact with the brake disc 900.

When the parking brake valve (i.e., a hand brake valve) is closed as the driver stops the vehicle or for emergency stop in driving, the pressure liquid in the second cavity 508 is driven back to the liquid container 103 through the channel 511 on the second piston 506, the core tube 502, the second passage 412, the second pipeline 202, and the parking brake valve by the elastic member 505, the pressure in the second cavity 508 disappears, under the effect of the elastic member 505, the second piston 506 drives the brake pad 800 against the brake disc 900, and the motor vehicle is put into a parking brake state.

When the service brake valve (i.e., a foot valve) is trod by the driver, the high-pressure liquid in the accumulator enters into the first cavity through the service brake valve, the first pipeline 201, and the first passage 406, and the first piston 501 drives the brake pad 800 against the brake disc 900, during which the first piston 501 may compress the elastic member 505, the brake disc 900 transmits the pressure to the axle 102, and the motor vehicle decelerates or stops. When the service brake valve is released by the driver, the liquid in the first cavity is driven back to the liquid container 103 through the first passage 406, the first pipeline 201 and the service brake valve, during which the first piston 501 releases the elastic member 505, the pressure in the first cavity disappears, the pressure of the brake pad 800 acting on the brake disc 900 disappears, and the service brake is released and normal driving is restored.

When the service brake valve (i.e., a foot valve) is trod by the driver and the number of revolution of the counting gear ring detected by the counting sensor reaches a set value, the motor 309 drives a valve spool of the drain valve 310 to rotate, and the drain valve 310 is repeatedly connected to and disconnected from the third pipeline 203 and the liquid container 103, such that the pressure between the brake pad 800 and the brake disc 900 is repeatedly increasing or decreasing, so that the liquid in the first cavity is intermittently discharged to the liquid container 103 through the drain valve 310, which can not only realize braking function, but also avoid anti-lock. When the number of revolution of the counting gear ring detected by the counting sensor is lower than the set value, the motor 309 stops rotating, the drain valve 310 is disconnected from the third pipeline 203 and the liquid container 103, and the service brake state is restored.

When a brake failure occurs to impede driving of the vehicle or when the parking brake needs to be released for a rescue, the driving device (i.e., a cylindrical handle) of the pump 315 is driven to pump the liquid in the liquid container 103 and the third pipeline 203 into the second cavity 508 through the pump 315, the second passage 412, the core tube 502, and the channel 511 of the second piston 506, such that the pressure in the second cavity 508 increases to compress the elastic member 505, the second piston 506 retracts (that is, the second piston 506 compresses the elastic member 505 toward the bottom of the second hole 504), the second piston 506 and the brake lining on the brake pad 800 are released together with the brake disc 900, and the parking brake is released to realize the movement of the vehicle.

When the parking brake function needs to be restored after the brake is repaired, the driving device of the unloading valve 322 is driven, the unloading valve 322 is in communication with the third pipeline 203 and the liquid container 103, the pressure liquid in the second cavity 508 flows out, and the channel of the unloading valve 322 with the third pipeline 203 and the liquid container 103 is closed, elastic force of the elastic member 505 is released, and the parking brake function is restored.

Two ends of the axle 102 are respectively sleeved with rims for mounting the tire 101. The disc hydraulic anti-lock brake is positioned within the rim and is fixedly provided on the axle 102. Two ends of the axle 102 are respectively sleeved with a brake disc 900. Each brake disc 900 is located between two groups of brake pads 800. The brake disc 900 is in contact with or separated from the brake pad 800 to realize or release braking. In addition, the first pipeline 201, the second pipeline 202 and the third pipeline 203 are arranged substantially in parallel below the vehicle frame, and can also be arranged reasonably according to the wiring under the vehicle frame, and due to the higher frequency of service braking, there are two first pipelines 201, which are respectively located on both sides of the second pipeline 202 and the third pipeline 203, so that each first pipeline 201 serves multiple disc hydraulic anti-lock brakes on one side of the vehicle frame, to ensure the brake quality.

## Claims

1. A disc hydraulic anti-lock brake, wherein the disc hydraulic anti-lock brake comprises:
a support (400) provided with a first hole (415), passages, a core tube (502), a brake pad base provided at an opening of the first hole (415), and a mounting portion being able to mount the support (400) to a vehicle axle, wherein the passages comprise a first passage (406), a second passage (412) and a third passage (409), and the second passage (412) is in communication with the core tube (502);
a first piston (501) provided in the first hole (415), wherein a first cavity is formed between the first piston (501) and a bottom of the first hole (415), the first cavity is able to be in communication with a service brake valve through the first passage (406) and a first pipeline, and the first piston (501) is provided with a second hole (504);
**characterized in that** the second hole (504) is provided with an end cover (509), an outer side of the end cover (509) is fixedly connected with the first piston (501), an inner side of the end cover (509) is provided with a sealing device, a channel is provided on a side wall of a second piston (506), the second piston (506) is provided to pass through the end cover (509) and extend within the second hole (504), an end of the core tube (502) distal to the second passage (412) passes through the first piston (501) and is inserted into the second piston (506), a second cavity is formed between the second piston (506) and the end cover (509), the second cavity is able to be in communication with a parking brake valve through the channel (511), the core tube (502), the second passage (412) and a second pipeline (202);
an elastic member (505) provided between the second piston (506) and a bottom of the second hole (504);
a brake pad (800) provided on the brake pad base;
a brake disc (900) provided with a counting gear ring and a mounting portion, wherein the mounting portion of the brake disc (900) is fixable to an output shaft of the vehicle axle;
a brake release system comprising a pump (315) and an unloading valve (322) provided on the support (400) and/or being able to be provided on a motor vehicle frame, wherein an inlet port of the pump (315) is able to be in communication with a liquid container (103) through a third pipeline (203), an outlet port of the pump (315) is able to be in communication with the second cavity (508) through the second passage (412) and the core tube (502); an inlet port of the unloading valve (322) is in communication with the second cavity through the second passage (412) and the core tube (502), and an outlet port of the unloading valve (322) is able to be in communication with the liquid container (103) through the third pipeline (203);
an anti-lock system comprising a counting sensor provided on the support (400) and/or being able to be provided on the motor vehicle frame, a motor (309) and a drain valve (310) provided on the support (400) and/or being able to be provided on the motor vehicle frame, and the counting gear ring provided on the brake disc (900), wherein an outlet port of the drain valve (310) is able to be in communication with the liquid container (103), an inlet port of the drain valve (310) is in communication with the first cavity through the third passage (409), and wherein in the case that the number of revolution of the counting gear ring detected by the counting sensor reaches a set count value, the motor (309) starts and drives the drain valve (310) to operate, so that an oil circuit between the first cavity and the third pipeline (203), the liquid container (103) is able to be opened or closed;
wherein alternatively, the brake release system and the anti-lock system are integrated to form a relay valve (300), the relay valve (300) is provided on the support (400) and/or being able to be provided on the motor vehicle frame, the relay valve (300) is directly connectable to the first passage (406), the second passage (412) and the third passage (409), and the relay valve (300) is also connectable to the first passage (406), the second passage (412) and the third passage (409) through a pipeline.

2. The disc hydraulic anti-lock brake according to claim 1, wherein the elastic member (505) is an air cavity enclosed by the second piston (506) and the second hole (504), and the air cavity is filled with compressed gas, or the elastic member (505) is a spring.

3. The disc hydraulic anti-lock brake according to claim 2, wherein
the first piston (501) is in the shape of a double-walled cylinder, a bottom wall of an inner wall of the first piston (501) is provided with a through hole and a sealing means through which the core tube (502) passes; the bottom wall between the inner wall and the outer wall of the first piston (501) is provided with an inflation device, and the inflation device communicates with the air cavity; or the first piston (501) is in the shape of a single-walled cup-shaped cylinder, a cup bottom of the first piston (501) is provided with a circular hole and a sealing means through which the core tube (502) passes;
the second piston (506) is in the shape of a thick-edge round cup, and a cup body of the second piston (506) is provided with the channel (511), side walls of the second piston (506) are respectively provided with a gas sealing portion (512) and a liquid sealing portion (513) that are in sealing contact with the first piston (501).

4. The disc hydraulic anti-lock brake according to any one of claims 1 to 3, wherein the pump (315) comprises a pump body, a pump driving device, and a third piston (318);
an upper portion of the pump body is provided with an inlet port and a third piston hole (320), the inlet port is in communication with the third piston hole (320), the inlet port of the pump body is able to be in communication with the liquid container (103) through the third pipeline (203), a lower portion of the pump body is provided with an outlet port, the outlet port of the pump body is in communication with the second cavity (508) through the second channel (412); a fulcrum on one side of the pump driving device is provided on the pump body, the third piston (318) on the other side of the pump driving device is mounted in the third piston hole (320), and the third piston (318) is connected to the pump driving device.

5. The disc hydraulic anti-lock brake according to any one of claims 1 to 4, wherein the unloading valve (322) comprises an unloading valve body, an unloading valve spool (324) and an unloading valve driving device (323), the unloading valve body is provided with an inlet port, an outlet port, and an unloading spool hole, an inlet port of the unloading valve body is in communication with the second cavity (508) through the second passage (412) and the core tube (502), and an outlet port of the unloading valve body is able to be in communication with the liquid container (103) through the third pipeline (203), the unloading spool hole is provided between the inlet port and the outlet port of the unloading valve body, the unloading valve spool (324) is provided within the unloading spool hole, and the unloading valve driving device (323) is connected to the unloading valve spool (324).

6. The disc hydraulic anti-lock brake according to any one of claims 1 to 5, wherein the drain valve (310) is provided with a drain valve body and a drain valve spool, the drain valve body is provided with a drain spool hole, an inlet port and an outlet port, an inlet port of the drain valve body is in communication with the first cavity through the third passage (409), and an outlet port of the drain valve body is able to be communicated with the liquid container (103) through the third pipeline (203);
the drain valve spool is mounted at a lower portion of the drain spool hole, the drain valve spool is provided with an inlet port, the inlet port of the drain valve spool is put into communication with the inlet port of the valve body, and the drain valve spool is provided with more than one outlet port, the outlet port of the drain valve spool and the outlet port of the drain valve body are assembled in a staggered manner;
a top of the drain valve spool is provided with a shaft hole which is connected to the motor (309), the motor (309) is mounted at an upper portion of the drain spool hole, a motor shaft of the motor (309) is inserted into the shaft hole of the drain valve spool, the motor drives the drain valve spool to rotate when the motor (309) is energized, the outlet port of the drain valve body and the outlet port of the drain valve spool are switched on and off alternately, and liquid discharged from the outlet port of the drain valve is able to be in communication with the liquid container (103) through the third pipeline (203).

7. The disc hydraulic anti-lock brake according to any one of claims 1 to 6, wherein the support (400) is separately provided as a left support (401) and a right support (402), a receiving cavity (414) for receiving the brake disc (900) is formed between the left support (401) and the right support (402), the left support (401) and the right support are fixedly connected, the first passage (406), the second passage (412), the third passage (409) of the left support (401) are correspondingly communicated with the first passage (406), the second passage (412), and third passage (409) of the right support (402), the left support (401) is provided with a mounting portion of the support, and the mounting portion of the support is fixed to the motor vehicle axle, and the first hole (415) on the left support (401) and the first hole (415) on the right support (402) are provided to be opposite to each other.

8. The disc hydraulic anti-lock brake according to any one of claims 1 to 7, wherein there are one or more first holes (415), and each of the first holes (415) is provided with the first piston (501), the second piston (506) and the core tube (502).

9. A disc hydraulic anti-lock brake, wherein the disc hydraulic anti-lock brake comprises:
a support (400) provided with a first hole (416), a second hole (417), a core tube (704), passages, a brake pad base provided at an opening of the first hole (416) and an opening of the second hole (417), and a mounting portion being able to mount the support (400) to a vehicle axle, wherein the passages comprise a first passage (406), a second passage (412) and a third passage (409), and the second passage (412) is in communication with the core tube (704);
a first piston (601) provided in the first hole (416), wherein a first cavity (602) is formed between a bottom of the first piston (601) and a bottom of the first hole (416), the first cavity (602) is able to be in communication with a service brake valve through the first passage (406) and a first pipeline (201);
a second piston (701) provided in the second hole (417), **characterized in that** the second hole (417) is provided with an end cover (705), a second cavity (702) is formed between the second piston (701) and the end cover (705), the second cavity (702) is able to be in communication with a parking brake valve through the core tube (704), the second passage (412), and a second pipeline (202);
a spring (703) provided between the second piston (701) and a bottom of the second hole;
a brake disc (900) provided with a counting gear ring and a mounting portion, wherein the mounting portion is fixable to an output shaft of the vehicle axle (102);
a brake release system comprising a pump (315) and an unloading valve (322) provided on the support (400) and/or being able to be provided on a motor vehicle frame, wherein an inlet port of the pump (315) is able to be in communication with a liquid container (103) through a third pipeline (203), an outlet port of the pump (315) is in communication with the second cavity (702) through the second passage (412) and the core tube (704); an inlet port of the unloading valve (322) is able to be in communication with the second cavity (702) through the second passage (412) and the core tube (704), and an outlet port of the unloading valve (322) is able to be in communication with the liquid container (103) through the third pipeline (203);
an anti-lock system comprising a counting sensor provided on the support (400) and/or being able to be provided on the motor vehicle frame, a motor (309) and a drain valve (310) provided on the support (400) and/or being able to be provided on the motor vehicle frame, and the counting gear ring provided on the brake disc (900), wherein an outlet port of the drain valve (310) is able to be in communication with the liquid container (103), an inlet port of the drain valve (310) is in communication with the first cavity (602) through the third passage (409), and in the case that the number of revolution of the counting gear ring detected by the counting sensor reaches a set count value, the motor (309) starts and drives the drain valve (310) to operate, so that an oil circuit between the first cavity (602) and the third pipeline (203), the liquid container (103) is able to be opened or closed;
wherein alternatively, the brake release system and the anti-lock system are integrated to form a relay valve (300), the relay valve (300) is provided on the support (400) and/or being able to be provided on the motor vehicle frame, the relay valve (300) is directly connectable to the first passage (406), the second passage (412) and the third passage (409), and the relay valve (300) is also connectable to the first passage (406), the second passage (412) and the third passage (409) through a pipeline.

10. A disc hydraulic anti-lock brake system, **characterized in that** the disc hydraulic anti-lock brake system is applied to braking of motor vehicles, the disc hydraulic anti-lock brake system comprises a liquid container (103), a liquid pump, a liquid filling valve, an accumulator, a service brake valve, a parking brake valve, an axle (102), a first pipeline (201), a second pipeline (202), a third pipeline (203) and a disc hydraulic anti-lock brake, wherein the disc hydraulic anti-lock brake is the disc hydraulic anti-lock brake according to any one of claims 1 to 8;
when the liquid pump is in operation, liquid in the liquid container (103) is driven into the accumulator by the liquid pump and the liquid filling valve, and is stored at a set pressure;
when the parking brake valve is opened by a driver, high-pressure oil in the accumulator enters into the second cavity (508) through the parking brake valve, the second pipeline (202), the second passage (412), the core tube (502) and the channel (511) on the second piston (506), and when a pressure in the second cavity (508) increases to a set pressure, the elastic member (505) is compressed, the second piston (506) retracts, the brake lining on the brake pad (800) releases the brake disc (900), and the parking brake is released;
when the parking brake valve is closed as the driver stops the vehicle or for emergency stop in driving, a pressure liquid in the second cavity (508) is driven back to the liquid container (103) through the channel (511) on the second piston (506), the core tube (502), the second passage (412), the second pipeline (202) and the parking brake valve by the elastic member (505), and under the effect of the elastic member (505), the second piston (506) drives the brake pad (800) to press against the brake disc (900), and the motor vehicle is put into a parking brake state;
when the service brake valve is trod by the driver, a high-pressure liquid in the accumulator enters into the first cavity through the service brake valve, the first pipeline (201) and the first passage (406), and the first piston (501) drives the brake pad (800) against the brake disc (900), the brake disc (900) transmits a pressure to the axle (102), and the motor vehicle decelerates or stops; when the service brake valve is released by the driver, the liquid in the first cavity is driven back to the liquid container through the first passage (406), the first pipeline (201), and the service brake valve;
when the service brake valve is operated by the driver and the number of revolution of the counting gear ring detected by the counting sensor reaches a set value, the motor (309) drives a drain valve spool to rotate, and the drain valve (310) is repeatedly connected to and disconnected from the third pipeline (203) and the liquid container (103); when the number of revolution of the counting gear ring detected by the counting sensor is lower than a set value, the motor (309) stops rotating, the drain valve (310) is disconnected from the third pipeline (203)and the liquid container (103), and the service brake state is restored;
when a brake failure occurs to impede driving of the vehicle or when the parking brake needs to be released for a rescue, a pump driving device is driven to pump the liquid in the liquid container (103) and the third pipeline (203) into the second cavity (508) through the pump315), the second passage (412), the core tube (502) and the channel (511) of the second piston (506), the elastic member (505) is compressed, the second piston (506) retracts, the brake lining and the brake disc on the brake pad (800) are released, and the parking brake is released;
when the parking brake function needs to be restored after the brake is repaired, an unloading valve driving device (323) is driven, the unloading valve (322) is in communication with the third pipeline (203) and the liquid container (103), the pressure liquid in the second cavity (508) flows out, and a channel of the unloading valve (322) with the third pipeline (203) and the liquid container (103) is closed, elastic force of the elastic member (505) is released, and the parking brake function is restored.

11. The disc hydraulic anti-lock brake system according to claim 10, wherein the brake system comprises a plurality of the disc hydraulic anti-lock brakes sharing a single relay valve (300), or each of the plurality of the disc hydraulic anti-lock brakes in the brake system includes a single relay valve (300) individually.

## Patentansprüche

1. Hydraulische blockiergeschützte Scheibenbremse, wobei die hydraulische blockiergeschützte Scheibenbremse umfasst:
einen Träger (400), der mit einem ersten Loch (415), Durchgängen, einem Kernrohr (502), einer Bremsklotzbasis, die an einer Öffnung des ersten Lochs (415) vorgesehen ist, und einem Befestigungsabschnitt versehen ist, der den Träger (400) an einer Fahrzeugachse befestigen kann, wobei die Durchgänge einen ersten Durchgang (406), einen zweiten Durchgang (412) und einen dritten Durchgang (409) umfassen und der zweite Durchgang (412) in Verbindung mit dem Kernrohr (502) steht;
einen ersten Kolben (501), der in dem ersten Loch (415) vorgesehen ist, wobei ein erster Hohlraum zwischen dem ersten Kolben (501) und einem Boden des ersten Lochs (415) gebildet wird, der erste Hohlraum mit einem Betriebsbremsventil über den ersten Durchgang (406) und eine erste Rohrleitung in Verbindung stehen kann, und der erste Kolben (501) mit einem zweiten Loch (504) versehen ist;
**dadurch gekennzeichnet, dass** das zweite Loch (504) mit einer Endabdeckung (509) versehen ist, eine Außenseite der Endabdeckung (509) fest mit dem ersten Kolben (501) verbunden ist, eine Innenseite der Endabdeckung (509) mit einer Dichtungsvorrichtung versehen ist, ein Kanal an einer Seitenwand eines zweiten Kolbens (506) vorgesehen ist, der zweite Kolben (506) so vorgesehen ist, dass er durch die Endabdeckung (509) hindurchgeht und sich innerhalb des zweiten Lochs (504) erstreckt, ein Ende des Kernrohrs (502) distal zu dem zweiten Durchgang (412) durch den ersten Kolben (501) hindurchgeht und in den zweiten Kolben (506) eingeführt wird, ein zweiter Hohlraum zwischen dem zweiten Kolben (506) und der Endabdeckung (509) gebildet wird, der zweite Hohlraum über den Kanal (511), das Kernrohr (502), den zweiten Durchgang (412) und eine zweite Rohrleitung (202) mit einem Feststellbremsventil in Verbindung stehen kann;
ein elastisches Element (505), das zwischen dem zweiten Kolben (506) und einem Boden des zweiten Lochs (504) vorgesehen ist;
einen Bremsklotz (800), der auf der Bremsklotzbasis vorgesehen ist;
eine Bremsscheibe (900), die mit einem Zählzahnkranz und einem Befestigungsabschnitt versehen ist, wobei der Befestigungsabschnitt der Bremsscheibe (900) an einer Abtriebswelle der Fahrzeugachse befestigt werden kann;
ein Bremslösesystem, umfassend eine Pumpe (315) und ein Entlastungsventil (322), die an dem Träger (400) vorgesehen sind und/oder an einem Kraftfahrzeugrahmen vorgesehen werden können, wobei eine Einlassöffnung der Pumpe (315) mit einem Flüssigkeitsbehälter (103) über eine dritte Rohrleitung (203) in Verbindung stehen kann, eine Auslassöffnung der Pumpe (315) mit dem zweiten Hohlraum (508) über den zweiten Durchgang (412) und das Kernrohr (502) in Verbindung stehen kann; eine Einlassöffnung des Entlastungsventils (322) über den zweiten Durchgang (412) und das Kernrohr (502) mit dem zweiten Hohlraum in Verbindung steht, und eine Auslassöffnung des Entlastungsventils (322) über die dritte Rohrleitung (203) mit dem Flüssigkeitsbehälter (103) in Verbindung stehen kann;
ein Blockierschutzsystem, umfassend einen Zählsensor, der an dem Träger (400) vorgesehen ist und/oder an dem Kraftfahrzeugrahmen vorgesehen werden kann, einen Motor (309) und ein Ablassventil (310), die an dem Träger (400) vorgesehen sind und/oder an dem Kraftfahrzeugrahmen vorgesehen werden können, und den Zählzahnkranz, der an der Bremsscheibe (900) vorgesehen ist, wobei eine Auslassöffnung des Ablassventils (310) mit dem Flüssigkeitsbehälter (103) in Verbindung stehen kann, eine Einlassöffnung des Ablassventils (310) über den dritten Durchgang (409) mit dem ersten Hohlraum in Verbindung steht, und wobei in dem Fall, dass die von dem Zählsensor erfasste Anzahl der Umdrehungen des Zählzahnkranzes einen eingestellten Zählwert erreicht, der Motor (309) startet und das Ablassventil (310) betreibt, so dass ein Ölkreislauf zwischen dem ersten Hohlraum und der dritten Rohrleitung (203), dem Flüssigkeitsbehälter (103) geöffnet oder geschlossen werden kann;
wobei alternativ das Bremslösesystem und das Blockierschutzsystem integriert sind, um ein Relaisventil (300) zu bilden, das Relaisventil (300) an dem Träger (400) vorgesehen ist und/oder an dem Kraftfahrzeugrahmen vorgesehen werden kann, das Relaisventil (300) direkt mit dem ersten Durchgang (406), dem zweiten Durchgang (412) und dem dritten Durchgang (409) verbunden werden kann und das Relaisventil (300) auch mit dem ersten Durchgang (406), dem zweiten Durchgang (412) und dem dritten Durchgang (409) über eine Rohrleitung verbunden werden kann.

2. Hydraulische blockiergeschützte Scheibenbremse nach Anspruch 1, wobei das elastische Element (505) ein Lufthohlraum ist, der von dem zweiten Kolben (506) und dem zweiten Loch (504) umschlossen wird, und der Lufthohlraum mit Druckgas gefüllt ist, oder das elastische Element (505) eine Feder ist.

3. Hydraulische blockiergeschützte Scheibenbremse nach Anspruch 2, wobei
der erste Kolben (501) die Form eines doppelwandigen Zylinders aufweist, eine Bodenwand einer Innenwand des ersten Kolbens (501) mit einem Durchgangsloch und einem Dichtungsmittel versehen ist, durch das das Kernrohr (502) verläuft; die Bodenwand zwischen der Innenwand und der Außenwand des ersten Kolbens (501) mit einer Aufblasvorrichtung versehen ist und die Aufblasvorrichtung mit dem Lufthohlraum in Verbindung steht; oder der erste Kolben (501) die Form eines einwandigen becherförmigen Zylinders aufweist, ein Becherboden des ersten Kolbens (501) mit einem kreisförmigen Loch und einer Dichtungsvorrichtung versehen ist, durch die das Kernrohr (502) hindurchgeht;
wobei der zweite Kolben (506) die Form eines dickrandigen runden Bechers aufweist und ein Becherkörper des zweiten Kolbens (506) mit dem Kanal (511) versehen ist, Seitenwände des zweiten Kolbens (506) jeweils mit einem Gasdichtungsabschnitt (512) und einem Flüssigkeitsdichtungsabschnitt (513) versehen sind, die in abdichtendem Kontakt mit dem ersten Kolben (501) stehen.

4. Hydraulische blockiergeschützte Scheibenbremse nach einem der Ansprüche 1 bis 3, wobei die Pumpe (315) einen Pumpenkörper, eine Pumpenantriebsvorrichtung und einen dritten Kolben (318) umfasst;
ein oberer Abschnitt des Pumpenkörpers mit einer Einlassöffnung und einem dritten Kolbenloch (320) versehen ist, die Einlassöffnung mit dem dritten Kolbenloch (320) in Verbindung steht, die Einlassöffnung des Pumpenkörpers über die dritte Rohrleitung (203) mit dem Flüssigkeitsbehälter (103) in Verbindung stehen kann, ein unterer Abschnitt des Pumpenkörpers mit einer Auslassöffnung versehen ist, die Auslassöffnung des Pumpenkörpers über den zweiten Kanal (412) mit dem zweiten Hohlraum (508) in Verbindung steht; ein Drehpunkt auf einer Seite der Pumpenantriebsvorrichtung am Pumpenkörper vorgesehen ist, der dritte Kolben (318) auf der anderen Seite der Pumpenantriebsvorrichtung in der dritten Kolbenbohrung (320) befestigt ist und der dritte Kolben (318) mit der Pumpenantriebsvorrichtung verbunden ist.

5. Hydraulische blockiergeschützte Scheibenbremse nach einem der Ansprüche 1 bis 4, wobei das Entlastungsventil (322) einen Entlastungsventilkörper, einen Entlastungsventilschieber (324) und eine Entlastungsventil-Antriebsvorrichtung (323) umfasst, der Entlastungsventilkörper mit einer Einlassöffnung, einer Auslassöffnung und einem Entlastungsschieberloch versehen ist, eine Einlassöffnung des Entlastungsventilkörpers über den zweiten Durchgang (412) und das Kernrohr (502) in Verbindung mit dem zweiten Hohlraum (508) steht, und eine Auslassöffnung des Entlastungsventilkörpers über die dritte Rohrleitung (203) mit dem Flüssigkeitsbehälter (103) in Verbindung stehen kann, das Entlastungsschieberloch zwischen der Einlassöffnung und der Auslassöffnung des Entlastungsventilkörpers vorgesehen ist, der Entlastungsventilschieber (324) innerhalb des Entlastungsschieberlochs vorgesehen ist und die Entlastungsventil-Antriebsvorrichtung (323) mit dem Entlastungsventilschieber (324) verbunden ist.

6. Hydraulische blockiergeschützte Scheibenbremse nach einem der Ansprüche 1 bis 5, wobei das Ablassventil (310) mit einem Ablassventilkörper und einem Ablassventilschieber versehen ist, der Ablassventilkörper mit einem Ablassschieberloch, einer Einlassöffnung und einer Auslassöffnung versehen ist, eine Einlassöffnung des Ablassventilkörpers über den dritten Durchgang (409) mit dem ersten Hohlraum in Verbindung steht und eine Auslassöffnung des Ablassventilkörpers über die dritte Rohrleitung (203) mit dem Flüssigkeitsbehälter (103) in Verbindung gebracht werden kann;
der Ablassventilschieber an einem unteren Abschnitt des Ablassschieberlochs befestigt ist, der Ablassventilschieber mit einer Einlassöffnung versehen ist, die Einlassöffnung des Ablassventilschiebers mit der Einlassöffnung des Ventilkörpers in Verbindung gebracht wird, und der Ablassventilschieber mit mehr als einer Auslassöffnung versehen ist, die Auslassöffnung des Ablassventilschiebers und die Auslassöffnung des Ablassventilkörpers versetzt montiert sind;
eine Oberseite des Ablassventilschiebers mit einem Wellenloch versehen ist, das mit dem Motor (309) verbunden ist, der Motor (309) an einem oberen Abschnitt des Ablassschieberlochs befestigt ist, eine Motorwelle des Motors (309) in das Wellenloch des Ablassventilschiebers eingeführt ist, der Motor den Ablassventilschieber antreibt, um sich zu drehen, wenn der Motor (309) eingeschaltet ist, die Auslassöffnung des Ablassventilkörpers und die Auslassöffnung des Ablassventilschiebers abwechselnd ein-und ausgeschaltet werden und die aus der Auslassöffnung des Ablassventils austretende Flüssigkeit über die dritte Rohrleitung (203) mit dem Flüssigkeitsbehälter (103) in Verbindung stehen kann.

7. Hydraulische blockiergeschützte Scheibenbremse nach einem der Ansprüche 1 bis 6, wobei der Träger (400) separat als linker Träger (401) und rechter Träger (402) vorgesehen ist, ein Aufnahmehohlraum (414) zur Aufnahme der Bremsscheibe (900) zwischen dem linken Träger (401) und dem rechten Träger (402) ausgebildet ist, der linke Träger (401) und der rechte Träger fest verbunden sind, der erste Durchgang (406), der zweite Durchgang (412) und der dritte Durchgang (409) des linken Trägers (401) entsprechend mit dem ersten Durchgang (406), dem zweiten Durchgang (412) und dem dritten Durchgang (409) des rechten Trägers (402) verbunden sind, die linke Stütze (401) mit einem Befestigungsabschnitt des Trägers versehen ist und der Befestigungsabschnitt des Trägers an der Kraftfahrzeugachse befestigt ist, und das erste Loch (415) an der linken Stütze (401) und das erste Loch (415) an der rechten Stütze (402) so vorgesehen sind, dass sie einander gegenüberliegen.

8. Hydraulische blockiergeschützte Scheibenbremse nach einem der Ansprüche 1 bis 7, wobei ein oder mehrere erste Löcher (415) vorhanden sind und jedes der ersten Löcher (415) mit dem ersten Kolben (501), dem zweiten Kolben (506) und dem Kernrohr (502) versehen ist.

9. Hydraulische blockiergeschützte Scheibenbremse, wobei die hydraulische blockiergeschützte Scheibenbremse umfasst:
einen Träger (400), der mit einem ersten Loch (416), einem zweiten Loch (417), einem Kernrohr (704), Durchgängen, einer Bremsklotzbasis, die an einer Öffnung des ersten Lochs (416) und einer Öffnung des zweiten Lochs (417) vorgesehen ist, und einem Befestigungsabschnitt versehen ist, der den Träger (400) an einer Fahrzeugachse befestigen kann, wobei die Durchgänge einen ersten Durchgang (406), einen zweiten Durchgang (412) und einen dritten Durchgang (409) umfassen, und der zweite Durchgang (412) mit dem Kernrohr (704) in Verbindung steht;
einen ersten Kolben (601), der in dem ersten Loch (416) vorgesehen ist, wobei ein erster Hohlraum (602) zwischen einem Boden des ersten Kolbens (601) und einem Boden des ersten Lochs (416) gebildet ist, wobei der erste Hohlraum (602) mit einem Betriebsbremsventil über den ersten Durchgang (406) und eine erste Rohrleitung (201) in Verbindung stehen kann;
einen zweiten Kolben (701), der in dem zweiten Loch (417) vorgesehen ist, **dadurch gekennzeichnet, dass** das zweite Loch (417) mit einer Endabdeckung (705) versehen ist, ein zweiter Hohlraum (702) zwischen dem zweiten Kolben (701) und der Endabdeckung (705) gebildet ist, der zweite Hohlraum (702) mit einem Feststellbremsventil über das Kernrohr (704), den zweiten Durchgang (412) und eine zweite Rohrleitung (202) in Verbindung stehen kann;
eine Feder (703), die zwischen dem zweiten Kolben (701) und einem Boden des zweiten Lochs vorgesehen ist;
eine Bremsscheibe (900), die mit einem Zählzahnkranz und einem Befestigungsabschnitt versehen ist, wobei der Befestigungsabschnitt an einer Ausgangswelle der Fahrzeugachse (102) befestigt werden kann;
ein Bremslösesystem, umfassend eine Pumpe (315) und ein Entlastungsventil (322), die an dem Träger (400) vorgesehen sind und/oder an einem Kraftfahrzeugrahmen vorgesehen werden können, wobei eine Einlassöffnung der Pumpe (315) über eine dritte Rohrleitung (203) mit einem Flüssigkeitsbehälter (103) in Verbindung stehen kann, eine Auslassöffnung der Pumpe (315) über den zweiten Durchgang (412) und das Kernrohr (704) mit dem zweiten Hohlraum (702) in Verbindung steht; eine Einlassöffnung des Entlastungsventils (322) über den zweiten Durchgang (412) mit dem zweiten Hohlraum (702) in Verbindung stehen kann und
das Kernrohr (704), und eine Auslassöffnung des Entlastungsventils (322) über die dritte Rohrleitung (203) mit dem Flüssigkeitsbehälter (103) in Verbindung stehen kann;
ein Blockierschutzsystem, umfassend einen Zählsensor, der an dem Träger (400) vorgesehen ist und/oder an dem Kraftfahrzeugrahmen vorgesehen werden kann, einen Motor (309) und ein Ablassventil (310), die an dem Träger (400) vorgesehen sind und/oder an dem Kraftfahrzeugrahmen vorgesehen werden können, und den Zählzahnkranz, der an der Bremsscheibe (900) vorgesehen ist, wobei eine Auslassöffnung des Ablassventils (310) mit dem Flüssigkeitsbehälter (103) in Verbindung stehen kann, eine Einlassöffnung des Ablassventils (310) über den dritten Durchgang (409) mit dem ersten Hohlraum (602) in Verbindung steht, und wobei in dem Fall, dass die von dem Zählsensor erfasste Anzahl der Umdrehungen des Zählzahnkranzes einen eingestellten Zählwert erreicht, der Motor (309) startet und das Ablassventil (310) betreibt, sodass ein Ölkreislauf zwischen dem ersten Hohlraum (602) und der dritten Rohrleitung (203), dem Flüssigkeitsbehälter (103) geöffnet oder geschlossen werden kann;
wobei alternativ das Bremslösesystem und das Blockierschutzsystem integriert sind, um ein Relaisventil (300) zu bilden, das Relaisventil (300) an dem Träger (400) vorgesehen ist und/oder an dem Kraftfahrzeugrahmen vorgesehen werden kann, das Relaisventil (300) direkt mit dem ersten Durchgang (406), dem zweiten Durchgang (412) und dem dritten Durchgang (409) verbunden werden kann und das Relaisventil (300) auch mit dem ersten Durchgang (406), dem zweiten Durchgang (412) und dem dritten Durchgang (409) über eine Rohrleitung verbunden werden kann.

10. Hydraulisches blockiergeschütztes Scheibenbremssystem, **dadurch gekennzeichnet, dass** das hydraulische blockiergeschützte Scheibenbremssystem zum Bremsen von Kraftfahrzeugen verwendet wird, wobei das hydraulische blockiergeschützte Scheibenbremssystem einen Flüssigkeitsbehälter (103), eine Flüssigkeitspumpe, ein Flüssigkeitsfüllventil, einen Druckspeicher, ein Betriebsbremsventil, ein Feststellbremsventil, eine Achse (102), eine erste Rohrleitung (201), eine zweite Rohrleitung (202), eine dritte Rohrleitung (203) und eine hydraulische blockiergeschützte Scheibenbremse umfasst, wobei die hydraulische blockiergeschützte Scheibenbremse die hydraulische blockiergeschützte Scheibenbremse nach einem der Ansprüche 1 bis 8 ist;
wenn die Flüssigkeitspumpe in Betrieb ist, wird die Flüssigkeit im Flüssigkeitsbehälter (103) durch die Flüssigkeitspumpe und das Flüssigkeitsfüllventil in den Druckspeicher getrieben und unter einem bestimmten Druck gespeichert;
wenn das Feststellbremsventil von einem Fahrer geöffnet wird, tritt Hochdrucköl im Druckspeicher durch das Feststellbremsventil, die zweite Rohrleitung (202), den zweiten Durchgang (412), das Kernrohr (502) und den Kanal (511) am zweiten Kolben (506) in den zweiten Hohlraum (508) ein, und wenn ein Druck in dem zweiten Hohlraum (508) auf einen Solldruck ansteigt, wird das elastische Element (505) zusammengedrückt, der zweite Kolben (506) zieht sich zurück, der Bremsbelag auf dem Bremsklotz (800) gibt die Bremsscheibe (900) frei und die Feststellbremse wird gelöst;
wenn das Feststellbremsventil geschlossen wird, wenn der Fahrer das Fahrzeug anhält oder für eine Notbremsung beim Fahren, wird eine Druckflüssigkeit im zweiten Hohlraum (508) über den Kanal (511) am zweiten Kolben (506), das Kernrohr (502), den zweiten Durchgang (412), die zweite Rohrleitung (202) und das Feststellbremsventil durch das elastische Element (505) zurück in den Flüssigkeitsbehälter (103) gedrückt, und unter der Wirkung des elastischen Elements (505) treibt der zweite Kolben (506) den Bremsklotz (800) an, um gegen die Bremsscheibe (900) zu drücken, und das Kraftfahrzeug wird in einen Feststellbremszustand versetzt;
wenn das Betriebsbremsventil vom Fahrer betätigt wird, tritt eine Hochdruckflüssigkeit im Speicher über das Betriebsbremsventil, die erste Rohrleitung (201) und den ersten Durchgang (406) in den ersten Hohlraum ein, und der erste Kolben (501) treibt den Bremsklotz (800) gegen die Bremsscheibe (900), die Bremsscheibe (900) überträgt einen Druck auf die Achse (102), und das Kraftfahrzeug verlangsamt oder hält an; wenn das Betriebsbremsventil vom Fahrer gelöst wird, wird die Flüssigkeit im ersten Hohlraum durch den ersten Durchgang (406), die erste Rohrleitung (201) und das Betriebsbremsventil zurück in den Flüssigkeitsbehälter getrieben;
wenn das Betriebsbremsventil vom Fahrer betrieben wird und die vom Zählsensor erfasste Umdrehungszahl des Zählzahnkranzes einen Sollwert erreicht, treibt der Motor (309) einen Ablassventilschieber zur Drehung an, und das Ablassventil (310) wird wiederholt mit der dritten Rohrleitung (203) und dem Flüssigkeitsbehälter (103) verbunden und von diesen getrennt; wenn die vom Zählsensor erfasste Drehzahl des Zählzahnkranzes unter einem Sollwert liegt, hört der Motor (309) auf, sich zu drehen, das Ablassventil (310) wird von der dritten Rohrleitung (203) und dem Flüssigkeitsbehälter (103) getrennt, und der Zustand der Betriebsbremse wird wiederhergestellt;
wenn ein Bremsversagen auftritt, das das Fahren des Fahrzeugs behindert, oder wenn die Feststellbremse für eine Rettung gelöst werden muss, wird eine Pumpenantriebsvorrichtung angetrieben, um die Flüssigkeit im Flüssigkeitsbehälter (103) und der dritten Rohrleitung (203) über die Pumpe (315), den zweiten Durchgang (412), das Kernrohr (502) und den Kanal (511) des zweiten Kolbens (506) in den zweiten Hohlraum (508) zu pumpen, das elastische Element (505) wird zusammengedrückt, der zweite Kolben (506) zieht sich zurück, der Bremsbelag und die Bremsscheibe auf dem Bremsklotz (800) werden gelöst, und die Feststellbremse wird gelöst;
wenn die Funktion der Feststellbremse nach der Reparatur der Bremse wiederhergestellt werden muss, wird eine Entlastungsventil-Antriebsvorrichtung (323) angetrieben, das Entlastungsventil (322) steht in Verbindung mit der dritten Rohrleitung (203) und dem Flüssigkeitsbehälter (103), die Druckflüssigkeit im zweiten Hohlraum (508) fließt ab, und ein Kanal des Entlastungsventils (322) mit der dritten Rohrleitung (203) und dem Flüssigkeitsbehälter (103) wird geschlossen, die elastische Kraft des elastischen Elements (505) wird gelöst, und die Feststellbremsfunktion wird wiederhergestellt.

11. Hydraulisches blockiergeschütztes Scheibenbremssystem nach Anspruch 10, wobei das Bremssystem eine Vielzahl von hydraulischen blockiergeschützten Scheibenbremsen umfasst, die sich ein einziges Relaisventil (300) teilen, oder jede der Vielzahl von hydraulischen blockiergeschützten Scheibenbremsen in dem Bremssystem ein einzelnes Relaisventil (300) beinhaltet.

## Revendications

1. Frein antiblocage hydraulique à disque, dans lequel le frein antiblocage hydraulique à disque comprend :
un support (400) pourvu d'un premier trou (415), de passages, d'un tube central (502), d'une base de plaquette de frein située au niveau d'une ouverture du premier trou (415) et d'une partie de montage qui est apte à monter le support (400) sur un essieu de véhicule, dans lequel les passages comprennent un premier passage (406), un deuxième passage (412) et un troisième passage (409), et le deuxième passage (412) est en communication avec le tube central (502) ;
un premier piston (501) situé dans le premier trou (415), dans lequel une première cavité est formée entre le premier piston (501) et un fond du premier trou (415), la première cavité est apte à être en communication avec une soupape de frein de service par le biais du premier passage (406) et d'une première conduite, et le premier piston (501) est pourvu d'un deuxième trou (504) ;
**caractérisé en ce que** le deuxième trou (504) est pourvu d'un cache d'extrémité (509), un côté extérieur du cache d'extrémité (509) est relié à demeure au premier piston (501), un côté intérieur du cache d'extrémité (509) est pourvu d'un dispositif d'étanchéité, un canal est situé sur une paroi latérale d'un deuxième piston (506), le deuxième piston (506) est prévu pour traverser le cache d'extrémité (509) et s'étendre dans le deuxième trou (504), une extrémité du tube central (502) distale par rapport au deuxième passage (412) traverse le premier piston (501) et est insérée dans le deuxième piston (506), une deuxième cavité est formée entre le deuxième piston (506) et le cache d'extrémité (509), la deuxième cavité est apte à être en communication avec une soupape de frein de stationnement par le biais du canal (511), du tube central (502), du deuxième passage (412) et d'une deuxième conduite (202) ;
un élément élastique (505) situé entre le deuxième piston (506) et un fond du deuxième trou (504) ;
une plaquette de frein (800) située sur la base de plaquette de frein ;
un disque de frein (900) pourvu d'une bague d'engrenage de comptage et d'une partie de montage, dans lequel la partie de montage du disque de frein (900) peut être fixée à un arbre de sortie de l'essieu de véhicule ;
un système de libération de frein comprenant une pompe (315) et une soupape de déchargement (322) situées sur le support (400) et/ou étant aptes à être situées sur un châssis de véhicule à moteur, dans lequel un orifice d'entrée de la pompe (315) est apte à être en communication avec un contenant de liquide (103) par le biais d'une troisième conduite (203), un orifice de sortie de la pompe (315) est apte à être en communication avec la deuxième cavité (508) par le biais d'un deuxième passage (412) et du tube central (502) ; un orifice d'entrée de la soupape de déchargement (322) est en communication avec la deuxième cavité par le biais du deuxième passage (412) et du tube central (502), et l'orifice de sortie de la soupape de déchargement (322) est apte à être en communication avec le contenant de liquide (103) par le biais de la troisième conduite (203) ;
un système antiblocage comprenant un capteur de comptage situé sur le support (400) et/ou étant apte à être situé sur le châssis de véhicule à moteur, un moteur (309) et une soupape de drainage (310) situés sur le support (400) et/ou étant aptes à être situés sur le châssis de véhicule à moteur, et la bague d'engrenage de comptage située sur le disque de frein (900), dans lequel un orifice de sortie de la soupape de drainage (310) est apte à être en communication avec le contenant de liquide (103), un orifice d'entrée de la soupape de drainage (310) est en communication avec la première cavité par le biais du troisième passage (409), et dans lequel dans le cas où le nombre de tours de la bague d'engrenage de comptage détecté par le capteur de comptage atteint une valeur de comptage de consigne, le moteur (309) démarre et entraîne le fonctionnement de la soupape de drainage (310), de telle sorte qu'un circuit d'huile entre la première cavité et la troisième conduite (203), le contenant de liquide (103) est apte à s'ouvrir ou se fermer ;
dans lequel en variante, le système de libération de frein et le système antiblocage sont intégrés pour former une soupape de relais (300), la soupape de relais (300) est située sur le support (400) et/ou étant apte à être située sur le châssis de véhicule à moteur, la soupape de relais (300) peut être directement reliée au premier passage (406), au deuxième passage (412) et au troisième passage (409), et la soupape de relais (300) peut également être reliée au premier passage (406), au deuxième passage (412) et au troisième passage (409) par le biais d'une conduite.

2. Frein antiblocage hydraulique à disque selon la revendication 1, dans lequel l'élément élastique (505) est une cavité d'air enfermée par le deuxième piston (506) et le deuxième trou (504), et la cavité d'air est remplie de gaz comprimé, ou l'élément élastique (505) est un ressort.

3. Frein antiblocage hydraulique à disque selon la revendication 2 dans lequel
le premier piston (501) se présente sous la forme d'un cylindre à double paroi, une paroi de fond du premier piston (501) est pourvue d'un trou traversant et d'un moyen d'étanchéité à travers lequel passe le tube central (502) ; la paroi de fond entre la paroi intérieure et la paroi extérieure du premier piston (501) est pourvue d'un dispositif de gonflage, et le dispositif de gonflage communique avec la cavité d'air ; ou le premier piston (501) se présente sous la forme d'un cylindre cupuliforme à paroi unique, un fond de coupe du premier piston (501) est pourvu d'un trou circulaire et d'un moyen d'étanchéité à travers lequel passe le tube central (502) ;
le deuxième piston (506) se présente sous la forme d'une coupe ronde à bord épais, et un corps de coupe du deuxième piston (506) est pourvu du canal (511), des parois latérales du deuxième piston (506) sont respectivement pourvues d'une partie d'étanchéité aux gaz (512) et d'une partie d'étanchéité aux liquides (513) qui sont en contact d'étanchéité avec le premier piston (501).

4. Frein antiblocage hydraulique à disque selon l'une quelconque des revendications 1 à 3, dans lequel la pompe (315) comprend un corps de pompe, un dispositif d'entraînement de pompe et un troisième piston (318) ;
une partie supérieure du corps de pompe est pourvue d'un orifice d'entrée et d'un troisième trou de piston (320), l'orifice d'entrée est en communication avec le troisième trou de piston (320), l'orifice d'entrée du corps de pompe est apte à être en communication avec le contenant de liquide (103) par le biais de la troisième conduite (203), une partie inférieure du corps de pompe est pourvue d'un orifice de sortie, l'orifice de sortie du corps de pompe est en communication avec la deuxième cavité (508) par le biais du deuxième canal (412) ; un pivot sur un côté du dispositif d'entraînement de pompe est situé sur le corps de pompe, le troisième piston (318) sur l'autre côté du dispositif d'entraînement de pompe est monté dans le troisième trou de piston (320), et le troisième piston (318) est relié au dispositif d'entraînement de pompe.

5. Frein antiblocage hydraulique à disque selon l'une quelconque des revendications 1 à 4, dans lequel la soupape de déchargement (322) comprend un corps de soupape de déchargement, un tiroir de soupape de déchargement (324) et un dispositif d'entraînement de soupape de déchargement (323), le corps de soupape de déchargement est pourvu d'un orifice d'entrée, d'un orifice de sortie et d'un trou de tiroir de déchargement, un orifice d'entrée du corps de soupape de déchargement est en communication avec la deuxième cavité (508) par le biais du deuxième passage (412) et du tube central (502), et un orifice de sortie du corps de soupape de déchargement est apte à être en communication avec le contenant de liquide (103) par le biais de la troisième conduite (203), le trou de tiroir de déchargement est situé entre l'orifice d'entrée et l'orifice de sortie du corps de soupape de déchargement, le tiroir de soupape de déchargement (324) est situé dans le trou de tiroir de déchargement, et le dispositif d'entraînement de soupape de déchargement (323) est relié au tiroir de soupape de déchargement (324).

6. Frein antiblocage hydraulique à disque selon l'une quelconque des revendications 1 à 5, dans lequel la soupape de drainage (310) est pourvue d'un corps de soupape de drainage et d'un tiroir de soupape de drainage, le corps de soupape de drainage est pourvu d'un trou de tiroir de drainage, d'un orifice d'entrée et d'un orifice de sortie, un orifice d'entrée du corps de soupape de drainage est en communication avec la première cavité par le biais du troisième passage (409), et un orifice de sortie du corps de soupape de drainage est apte à être en mis en communication avec le contenant de liquide (103) par le biais de la troisième conduite (203) ;
le tiroir de soupape de drainage est monté au niveau d'une partie inférieure du trou de tiroir de drainage, le tiroir de soupape de drainage est pourvu d'un orifice d'entrée, l'orifice d'entrée du tiroir de soupape de drainage est mis en communication avec l'orifice d'entrée du corps de soupape, et le tiroir de soupape de drainage est pourvu de plus d'un orifice de sortie, l'orifice de sortie du tiroir de soupape de drainage et l'orifice de sortie du corps de soupape de drainage sont assemblés en quinconce ;
un sommet du tiroir de soupape de drainage est pourvu d'un trou d'arbre qui est relié au moteur (309), le moteur (309) est monté au niveau d'une partie supérieure du trou de tiroir de drainage, un arbre de moteur du moteur (309) est inséré dans le trou d'arbre du tiroir de soupape de drainage, le moteur entraîne le tiroir de soupape de drainage en rotation lorsque le moteur (309) est mis sous tension, l'orifice de sortie du corps de soupape de drainage et l'orifice de sortie du tiroir de soupape de drainage sont activés et désactivés en alternance, et du liquide rejeté par l'orifice de sortie de la soupape de drainage est apte à être en communication avec le contenant de liquide (103) par le biais de la troisième conduite (203).

7. Frein antiblocage hydraulique à disque selon l'une quelconque des revendications 1 à 6, dans lequel le support (400) est prévu séparément en tant que support gauche (401) et support droit (402), une cavité de réception (414) destinée à recevoir le disque de frein (900) est formée entre le support gauche (401) et le support droit (402), le support gauche (401) et le support droit sont reliés à demeure, le premier passage (406), le deuxième passage (412), le troisième passage (409) du support gauche (401) sont en communication de façon correspondante avec le premier passage (406), le deuxième passage (412) et le troisième passage (409) du support droit (402), le support gauche (401) est pourvu d'une partie de montage du support, et la partie de montage du support est fixée à l'essieu de véhicule à moteur, et le premier trou (415) sur le support gauche (401) et le premier trou (415) sur le support droit (402) sont disposés à l'opposé l'un de l'autre.

8. Frein antiblocage hydraulique à disque selon l'une quelconque des revendications 1 à 7, dans lequel il y a un ou plusieurs premiers trous (415), et chacun des premiers trous (415) est pourvu du premier piston (501), du deuxième piston (506) et du tube central (502).

9. Frein antiblocage hydraulique à disque, dans lequel le frein antiblocage hydraulique à disque comprend :
un support (400) pourvu d'un premier trou (416), d'un deuxième trou (417), d'un tube central (704), de passages, d'une base de plaquette de frein située au niveau d'une ouverture du premier trou (416) et d'une ouverture du deuxième trou (417), et d'une partie de montage qui est apte à monter le support (400) sur un essieu de véhicule, dans lequel les passages comprennent un premier passage (406), un deuxième passage (412) et un troisième passage (409), et le deuxième passage (412) est en communication avec le tube central (704) ;
un premier piston (601) situé dans le premier trou (416), dans lequel une première cavité (602) est formée entre un fond du premier piston (601) et un fond du premier trou (416), la première cavité (602) est apte à être en communication avec une soupape de frein de service par le biais du premier passage (406) et d'une première conduite (201) ;
un deuxième piston (701) situé dans le deuxième trou (417), dans lequel le deuxième trou (417) est pourvu d'un cache d'extrémité (705), une deuxième cavité (702) est formée entre le deuxième piston (701) et le cache d'extrémité (705), la deuxième cavité (702) est apte à être en communication avec une soupape de frein de stationnement par le biais du tube central (704), du deuxième passage (412) et d'une deuxième conduite (202) ;
un ressort (703) situé entre le deuxième piston (701) et un fond du deuxième trou ;
un disque de frein (900) pourvu d'une bague d'engrenage de comptage et d'une partie de montage, dans lequel la partie de montage peut être fixée à un arbre de sortie de l'essieu de véhicule (102) ;
un système de libération de frein comprenant une pompe (315) et une soupape de déchargement (322) situées sur le support (400) et/ou étant aptes à être situées sur un châssis de véhicule à moteur, dans lequel un orifice d'entrée de la pompe (315) est apte à être en communication avec un contenant de liquide (103) par le biais d'une troisième conduite (203), un orifice de sortie de la pompe (315) est apte à être en communication avec la deuxième cavité (702) par le biais d'un deuxième passage (412) et du tube central (704) ; un orifice d'entrée de la soupape de déchargement (322) est apte à être en communication avec la deuxième cavité (702) par le biais du deuxième passage (412) et du tube central (704), et un orifice de sortie de la soupape de déchargement (322) est apte à être en communication avec le contenant de liquide (103) par le biais de la troisième conduite (203) ;
un système antiblocage comprenant un capteur de comptage situé sur le support (400) et/ou étant apte à être situé sur le châssis de véhicule à moteur, un moteur (309) et une soupape de drainage (310) situés sur le support (400) et/ou étant aptes à être situés sur le châssis de véhicule à moteur, et la bague d'engrenage de comptage située sur le disque de frein (900), dans lequel un orifice de sortie de la soupape de drainage (310) est apte à être en communication avec le contenant de liquide (103), un orifice d'entrée de la soupape de drainage (310) est en communication avec la première cavité (602) par le biais du troisième passage (409), et dans lequel dans le cas où le nombre de tours de la bague d'engrenage de comptage détecté par le capteur de comptage atteint une valeur de comptage de consigne, le moteur (309) démarre et entraîne le fonctionnement de la soupape de drainage (310), de telle sorte qu'un circuit d'huile entre la première cavité et la troisième conduite (203), le contenant de liquide (103) est apte à s'ouvrir ou se fermer ;
dans lequel en variante, le système de libération de frein et le système antiblocage sont intégrés pour former une soupape de relais (300), la soupape de relais (300) est située sur le support (400) et/ou étant apte à être située sur le châssis de véhicule à moteur, la soupape de relais (300) peut être directement reliée au premier passage (406), au deuxième passage (412) et au troisième passage (409), et la soupape de relais (300) peut également être reliée au premier passage (406), au deuxième passage (412) et au troisième passage (409) par le biais d'une conduite.

10. Système de frein antiblocage hydraulique à disque, **caractérisé en ce que** le système de frein antiblocage hydraulique à disque est appliqué au freinage de véhicules à moteur, le système de frein antiblocage hydraulique à disque comprend un contenant de liquide (103), une pompe à liquide, une soupape de remplissage en liquide, un accumulateur, une soupape de frein de service, une soupape de frein de stationnement, un essieu (102), une première conduite (201), une deuxième conduite (202), une troisième conduite (203) et un frein antiblocage hydraulique à disque, dans lequel le frein antiblocage hydraulique à disque est le frein antiblocage hydraulique à disque selon l'une quelconque des revendications 1 à 8 ;
lorsque la pompe à liquide est en fonctionnement, le liquide dans le contenant de liquide (103) est entraîné dans l'accumulateur par la pompe à liquide et la soupape de remplissage en liquide, et est stocké à une pression de consigne ;
lorsque la soupape de frein de stationnement est ouverte par un conducteur, une huile haute-pression dans l'accumulateur entre dans la deuxième cavité (508) par le biais de la soupape de frein de stationnement, de la deuxième conduite (202), du deuxième passage (412), du tube central (502) et du canal (511) sur le deuxième piston (506), et lorsqu'une pression dans la deuxième cavité (508) augmente à une pression de consigne, l'élément élastique (505) est comprimé, le deuxième piston (506) se rétracte, la garniture de frein sur la plaquette de frein (800) libère le disque de frein (900), et le frein de stationnement est libéré ;
lorsque la soupape de frein de stationnement est fermée quand le conducteur arrête le véhicule ou pour un arrêt d'urgence en conduite, un liquide de pression dans la deuxième cavité (508) est entraîné de retour dans le contenant de liquide (103) par le biais du canal (511) sur le deuxième piston (506), du tube central (502), du deuxième passage (412), de la deuxième conduite (202) et de la soupape de frein de stationnement par l'élément élastique (505), et sous l'effet de l'élément élastique (505), le deuxième piston (506) entraîne la plaquette de frein (800) pour appuyer de nouveau sur le disque de frein (900), et le véhicule à moteur est mis dans un état de frein de stationnement ;
lorsque la soupape de frein de service est renclenché par le conducteur, un liquide haute-pression dans l'accumulateur entre dans la première cavité par le biais de la soupape de frein de service, de la première conduite (201) et du premier passage (406), et le premier piston (501) entraîne la plaquette de frein (800) contre le disque de frein (900), le disque de frein (900) transmet une pression à l'essieu (102), et le véhicule à moteur ralentit ou s'arrête ; lorsque la soupape de frein de service est libérée par le conducteur, le liquide dans la première cavité est entraîné de retour dans le contenant de liquide par le biais du premier passage (406), de la première conduite (201) et de la soupape de frein de service ;
lorsque la soupape de frein de service est actionnée par le conducteur et que le nombre de tours de la bague d'engrenage de comptage détecté par le compteur de comptage atteint une valeur de consigne, le moteur (309) entraîne un tiroir de soupape de drainage en rotation, et la soupape de drainage (310) est reliée à la troisième conduite (203) et au contenant de liquide (103) et en est désolidarisée à plusieurs reprises ; lorsque le nombre de tours de la bague d'engrenage de comptage détecté par le capteur de comptage est inférieur à une valeur de consigne, le moteur (309) s'arrête de tourner, la soupape de drainage (310) est désolidarisée de la troisième conduite (203) et du contenant de liquide (103), et l'état de frein de service est rétabli ;
lorsqu'une défaillance de frein survient pour entraver la conduite du véhicule ou lorsque le frein de stationnement a besoin d'être libéré pour secours, un dispositif d'entraînement de pompe est entraîné pour pomper le liquide dans le contenant de liquide (103) et la troisième conduite (203) dans la deuxième cavité (508) par le biais de la pompe (315), du deuxième passage (412), du tube central (502) et du canal (511) du deuxième piston (506), l'élément élastique (505) est comprimé, le deuxième piston (506) se rétracte, la garniture de frein et le disque de frein sur la plaquette de frein (800) sont libérés, et le frein de stationnement est rétabli ;
lorsque la fonction frein de stationnement a besoin d'être rétablie après la réparation du frein, un dispositif d'entraînement de soupape de déchargement (323) est entraîné, la soupape de déchargement (322) est en communication avec la troisième soupape (203) et le contenant de liquide (103), le liquide de pression dans la deuxième cavité (508) s'écoule à l'extérieur, et un canal de la soupape de déchargement (322) avec la troisième conduite (203) et le contenant de liquide (103) est fermé, une force élastique de l'élément élastique (505) est libérée, et la fonction frein de stationnement est rétablie.

11. Système de frein antiblocage hydraulique à disque selon la revendication 10, dans lequel le système de frein comprend une pluralité des freins antiblocage hydrauliques à disque partageant une soupape de relais unique (300), ou chacun de la pluralité des freins antiblocage hydrauliques à disque dans le système de frein inclut une soupape de relais unique (300) individuellement.
